# EUROPÄISCHE PATENTSCHRIFT

(11) **EP 2 347 967 B1**
(45) Veröffentlichungstag und Bekanntmachung des Hinweises auf die Patenterteilung: **21.11.2012**
(21) Anmeldenummer: 10172242.9
(22) Anmeldetag: 06.08.2010
(51) Int. Cl.: B65D 33/02

(54) **Folienbeutel**
Plastic film bag with relief
Sac plastique doté d'un relief

(30) Priorität: 22.01.2010 DE 202010001261 U
(43) Veröffentlichungstag der Anmeldung: 27.07.2011
(73) Patentinhaber: Mondi AG, 1032 Wien (AT)
(72) Erfinder: Watterott, Oswald, D-53562 Sankt Katharinen (DE); Mumelter, Bernhard, 6330 Kufstein (AT)
(74) Vertreter: Schneider, Michael

(56) Entgegenhaltungen:
- EP-A1- 1 950 137
- WO-A1-2008/145164
- US-A- 3 276 183

## Beschreibung

### TECHNISCHES FELD

Es ist ein Herstellungsverfahren für einen Folienbeutel offenbart.

Die Erfindung betrifft ein Verschließverfahren für einen Folienbeutel.

Es ist weiterhin eine Verwendung einer Referenzmarke auf einer Folie für die Herstellung eines Folienbeutels offenbart.

Es ist weiterhin eine Vorrichtung zum Herstellen eines Folienbeutels offenbart.

Es ist weiterhin ein Folienbeutel hergestellt durch ein Herstellungsverfahren offenbart.

### HINTERGRUND

Ein Herstellungsverfahren für einen Folienbeutel gemäß der eingangs im ersten Absatz angeführten Gattung ist der Anmelderin bekannt Siehe z.B. WO 2008/145114. Bei besagtem Herstellungsverfahren kommt eine Folie zum Einsatz, die in regelmäßigen Abständen sogenannte Druckstreifen oder Steuermarken als Referenzmarken aufweist. Eine solche Referenzmarke wird während des Herstellungsverfahrens optoelektronisch erkannt und dient zur Positionierung und / oder Orientierung von der Folie bzw. von einem Folienstreifen zur Herstellung des Folienbeutels und / oder von Elementen, die auf der Folie bzw. dem Folienstreifen aufgebracht werden müssen.

Die Verwendung einer solchen Folie hat sich jedoch als problematisch erweisen, weil solche Referenzmarken und dergleichen nur an jenen Stellen der Folie aufgedruckt sein können, die nach Fertigstellung des Folienbeutels nicht mehr sichtbar sind, da andernfalls der hochwertige Eindruck der mit dem Folienbeutel realisierten Verpackung verloren geht. Üblicherweise steht für das Aufdrucken der Druckstreifen oder Steuermarken auch nicht die als spätere Innenseite des Folienbeutels zu verwendende Seite der Folie zur Verfügung, da es zu aufwändig wäre, beide Seiten der Folie zu bedrucken. Daher steht faktisch nur die als spätere Außenseite des Folienbeutels zu verwendende Seite der Folie für das Aufdrucken der Referenzmarken zur Verfügung und die Referenzmarken werden zusammen - also im selben Arbeitsgang - mit dem für den fertigen Folienbeutel vorgesehenen Aufdruck in Randbereichen von für die Herstellung des Folienbeutels bestimmten Folienabschnitten bzw. Bereichen der Folie erzeugt.

Auch aus der US 3,276,183 sind ähnliche Referenzmarken bekannt, die in vordefinierten Abständen am Rand einer streifenförmigen Bahn aufgebracht sind und zur registergenauen Positionierung besagter Bahn auf einer anderen Bahn dienen.

Es ist daher eine Aufgabe der Erfindung, ein Verschließverfahren bereitzustellen, so dass die vorstehend angeführten Probleme vermieden sind.

### ZUSAMMENFASSUNG DER ERFINDUNG

Die Aufgabe wird durch ein Verschließverfahren gemäß Anspruch 1 gelöst. Es ist ein Herstellungsverfahren für einen Folienbeutel offenbart, bei welchem Herstellungsverfahren eine Folie verwendet wird, wobei die Folie eine Referenzmarken zur Positionierung und / oder Orientierung von der Folie oder von einem Streifen besagter Folie und / oder von einem Element aufweist, welches Element in Bezug auf die Referenzmarke auszurichten ist, wobei die Referenzmarke durch ein Relief gebildet ist.

Der Gegenstand der Erfindung ist ein Verschließverfahren zum Verschließen von einem Folienbeutel, der aus einer Folie gefertigt ist, wobei die Folie eine Referenzmarke in Form eines Reliefs zur Positionierung und / oder Orientierung aufweist und wobei die Folie an ihrer ersten Seite eine nicht-siegelfähige Lage aufweist und die nicht-siegelfähige Lage eine Außenlage des Folienbeutels bildet und wobei die Folie benachbart zu der Außenlage eine siegelfähige Lage aufweist, und wobei der Folienbeutel eine Vorder- und Hinterwand und zwischen der Vorder- und Hinterwand eingelegte linke und rechte Seitenfalten aufweist, und in einem als Fußbereich bestimmten ersten Endabschnitt einen ersten Fußteilbereich zur Bildung einer rand- bzw. fußseitigen Fahne und einen daran angrenzenden zweiten Fußteilbereich aufweist, wobei im Fußbereich die Vorder- oder die Hinterwand innerhalb des Bereiches von zumindest einer der Seitenfalten sowohl in dem ersten Fußteilbereich als auch in dem zweiten Fußteilbereich eine Öffnung in zumindest der Außenlage aufweist, durch welche Öffnung hindurch die siegelfähige Lage von außerhalb des Folienbeutels zugänglich ist, und eine Position der Öffnung so gewählt ist, dass bei hergestellter und an den zweiten Fußteilbereich umgelegter fußseitigen Fahne zwei Bereiche der von außerhalb des Folienbeutels zugänglichen siegelfähigen Lage einander überlappend zu liegen kommen, wobei - bevorzugt in Bezug auf das Relief - die fußseitige Fahne durch Bildung einer ersten Quersiegelnaht im Grenzbereich des ersten Fußteilbereiches und des zweiten Fußteilbereichs realisiert wird, und - bevorzugt in Bezug auf das Relief - die fußseitige Fahne umgelegt an den zweiten Fußteilbereich angelegt wird, so dass die zwei Bereiche der siegelfähigen Lagen einander überlappen und im Bereich der Überlappung miteinander versiegelt werden.

Zudem ist eine Verwendung einer Folie mit einer Referenzmarke bei einem Herstellungsverfahren eines Folienbeutels aus besagter Folie offenbart, wobei die Referenzmarke zur Positionierung und / oder Orientierung von der Folie oder von einem Streifen besagter Folie und / oder von einem Element dient, welches Element in Bezug auf die Referenzmarke auszurichten ist, wobei als die Referenzmarke ein Relief verwendet wird.

Weiterhin ist eine Herstellungsvorrichtung zum Herstellen eines Folienbeutels aus einer Folie offenbart, wobei die Folie eine Referenzmarken zur Positionierung und / oder Orientierung von der Folie oder von einem Streifen besagter Folie und / oder von einem Element aufweist, welches Element in Bezug auf die Referenzmarke auszurichten ist, wobei die Herstellungsvorrichtung eine Positionierungs- und / oder Orientierungs-Einrichtung zum Erkennen und Nutzen einer Referenzmarke für Orientierungs- und / oder Positionierungszwecke aufweist, wobei die Referenzmarke durch ein Relief gebildet ist und die Einrichtung zum Erkennen und Nutzen von besagtem Relief als Referenzmarke ausgebildet ist.

Weiterhin ist ein Folienbeutel offenbart, der nach dem offenbarten Herstellungsverfahren hergestellt wurde.

Das Relief ist in die Kunststofffolie eingeprägt. Das Relief ist ein über eine Fläche - im vorliegenden Fall die das Relief umgebende Oberfläche der Kunststofffolie - erhaben hervortretendes Bildwerk. Damit unterscheidet sich das Relief grundsätzlich von einer flächigen Grobstrukturierung der Oberfläche, die sich im Wesentlichen über die gesamte Fläche der Kunststofffolie oder Bereiche davon erstreckt und vorwiegend dazu dient, die Reibung zwischen aneinander anliegenden Beuteln zu erhöhen oder flache Bilder darzustellen.

Das Relief kann einstufig oder mehrstufig ausgebildet sein. Es kann ein einzelnes Relief oder eine Gruppe von Reliefs vorgesehen sein. Die Reliefs können eng aneinander anliegend angeordnet sein und folglich einen Verbund bilden. Sie können aber auch mit entsprechendem Abstand voneinander angeordnet sein und somit als einzelne Elemente für die opto-elektronische Erkennung in Erscheinung treten. Wenn mehrere Reliefs existieren, können diese auf die einzelnen Wandbereiche oder Wandelemente verteilt sein.

Das Relief wird in der Kunststofffolie noch vor ihrer Verarbeitung zu einem Beutel in einer Prägestation eingeprägt. Zu diesem Zweck wird die Kunststofffolie zwischen einer Matrize und einer Patrize positioniert und die Matrize und die Patrize zusammengepresst. Die Matrize und die Patrize weisen die Form des Reliefs auf. Danach kann die Kunststofffolie wieder aufgerollt und gelagert werden. Sie kann aber auch direkt zu einer Beutelherstellungsstation weiter befördert werden, wo sie zu einem (meist einseitig offenen) Folienbeutel verarbeitet wird.

Im Übergang zwischen einem nicht geprägten Bereich der Kunststofffolie, die das Relief umgibt, und den in die Kunststofffolie eingeprägten Erhebungen, die das Relief bilden, liegt ein Übergangsbereich. Der Übergangsbereich bildet die Kontur bzw. den Rand des Reliefs. In diesem Übergangsbereich verändert die Kunststofffolie ihre Orientierung, was zu einem veränderten Reflexions- bzw. Absorptionsverhalten für Licht gegenüber den Bereichen der Kunststofffolie außerhalb der Kontur führt. Die Kontur des Reliefs bildet also eine Diskontinuität im optischen Verhalten der Folie. Die Diskontinuität erleichtert die opto-elektronische Erkennung der Kontur erheblich. In den umliegenden Bereichen um die Kontur, also dort wo die Kunststofffolie nach wie vor meist eben verläuft, ändert sich an dem optischen Verhalten der Kunststofffolie praktisch nichts.

Eine solche Folie wird meist auf einer "Form Fill and Seal Maschine" verarbeitet. Dort wird zunächst eine Folie zu einem einseitig offenen Beutel verarbeitet, dann mit Füllgut gefüllt und anschließend die noch offene Seite (meist die obere, mitunter auch die untere Seite) des Beutels verschlossen. Der Beutel kann jedoch auch mit einem verschlossenen Kopfbereich vorgefertigt werden und dann erst zu einem späteren Zeitpunkt bei einem Füllgut abfüllenden Unternehmen mit Füllgut befüllt werden und dort mit einer Verschließmaschine im Fußbereich verschlossen werden.

Gemäß einem Aspekt weist die Beutelwand einen Vorder- und Rückwandbereich auf und das Relief befindet sich in dem Vorder- und/oder Rückwandbereich. Ein Relief auf der Vorder- und/oder Rückwand des Beutels bringt den Vorteil mit sich, dass während der Verarbeitung der Folie das Relief praktisch immer sichtbar ist und daher in jedem Verarbeitungsschritt des Beutels maschinell erkannt werden kann. Dies sogar solange der Beutel leer im vorgefertigten Zustand zu einer Abfüllstation transportiert wird. Voraussetzung dafür ist natürlich, dass die Vorder- und/oder Rückwand nicht durch andere Gegenstände abgedeckt ist.

Gemäß einem weiteren Aspekt weist die Beutelwand zumindest einen Seitenwandbereich auf und das Relief befindet sich in dem Seitenwandbereich. Der Beutel kann einen einzigen Seitenwandbereich aufweisen. Zusammen mit einem Vorder- und Rückwandbereich ergibt sich dann ein Dreieckbeutel. Bevorzugt sind jedoch zwei Seitenwandbereiche vorgesehen, nämlich ein linker und ein rechter Seitenwandbereich. Die Seitenwandbereiche sind meist durch eine Falte in zwei Teile getrennt und zwischen dem Vorder- und Rückwandbereich eingeschlagen. Ein so geformter Seitenwandbereich wird in seiner Gesamtheit im Fachjargon auch oft als die "Seitenfalte" bezeichnet. Die Seitenwandbereiche können jedoch auch ohne Seitenfalte ausgebildet sein.

Wird der noch leere vorgefertigte Beutel zu einer Abfüllstation hin transportiert, sind diese Seitenwandbereiche üblicherweise nicht oder beinahe nicht sichtbar. Erst wenn der Beutel gefüllt wird, wird auch der Seitenwandbereich vollständig sichtbar, weil sich der Beutel aufbläht. Das Relief auf dem Seitenwandbereich wird erst durch das Befüllen und Öffnen der Seitenfalte gut sichtbar.

Die gefüllten Beutel werden üblicherweise nebeneinander stehend oder aufeinander liegend gestapelt transportiert. In dieser Konfiguration liegt immer ein Vorderwandbereich eines Beutels an einem Rückwandbereich eines anderen Beutels an. Querab zu den Vorder- und Rückwandbereichen sind dann nur die Seitenwandbereiche sichtbar. Das Anbringen des Reliefs in dem Seitenwandbereich erleichtert also das automatische Erkennen und Identifizieren der Beutel im eng aneinander geschlichteten Zustand. Selbst wenn in einem Stapel Beutel mit unterschiedlichem Füllgut gestapelt sind, stellt dies kein Problem dar, weil ja das Relief in dem Seitenwandbereich zu sehen ist. Über das Relief kann der Inhalt der Beutel problemlos maschinell identifiziert werden.

Gemäß einer bevorzugten Ausbildungsform ist das Relief mit einer Materialschicht beschichtet. Die Materialschicht weist ein von dem optischen Verhalten der Kunststofffolie abweichendes Reflexions- bzw. Absorptionsverhalten oder ggf. Polarisationsverhalten für Licht auf. Die Schicht mit der das Relief beschichtet ist, kann beispielsweise eine Metallfolie wie z.B. eine Gold- oder Silberfolie oder einen Sicherheitssiegel bzw. ein Hologramm sein. Die Beschichtung des Reliefs mit besagten Materialien hat den Vorteil, dass die Erkennung nicht nur durch die Kontur des Reliefs, sondern auch durch seine flächige Ausbildung erleichtert ist. Es stehen nun großflächige Bereiche für die opto-elektronische Erkennung bzw. Identifizierung des Beutels zur Verfügung. Beschichtungen mit Metallfolien erhöhen das Reflexionsvermögen des Reliefs gegenüber der umliegenden Folienoberfläche. Dies erleichtert die maschinelle Erkennbarkeit bei Dämmerungslicht oder erhöhter Abschattung. Werden demgegenüber Beschichtungen verwendet, die eine erhöhte Absorption von Licht verglichen mit der umliegenden Folienoberfläche bewirken, so erhöht dies die maschinelle Erkennbarkeit bei sehr hellen Lichtverhältnissen, weil die beschichteten Bereiche Licht weniger stark reflektieren. Um allen Situationen gerecht zu werden, können auch Bereiche in dem Relief mit erhöhtem Reflexionsverhalten und solche mit niedrigerem Reflexionsverhalten vorliegen. Der Informationsgehalt dieser Bereiche ist dann bevorzugt identisch oder auch unterschiedlich sein, wobei die maschinelle Erkennbarkeit je nach Lichtsituation für den eine oder den anderen Bereich begünstigt ist.

Das Aufbringen des Materials kann dabei wie folgt erfolgen. Es wird einerseits die Kunststofffolie bahnartig zu einer Prägestation zugeführt. Die Prägestation weist zum Beispiel oberhalb der Kunststofffolienbahn eine Matrize und unterhalb der Kunststofffolienbahn eine Patrize auf. Zugleich wird synchron zu der Kunststofffolie das aufzuprägende Material auf einer Trägerbahn zu der Prägestation zugeführt, wobei das Material auf jener der Kunststofffolie zugewandten Seite der Trägerbahn angebracht ist. Die Trägerbahn mit dem darauf befindlichen Material wird also zwischen der Kunststofffolie und der Matrize an jener Seite der Kunststofffolie befördert, die bei dem fertigen Beutel nach außen weist. In einem nächsten Arbeitsschritt erfolgt ein Zusammenpressen der Kunststofffolie mit der Trägerbahn zwischen der Matrize und der Patrize, so dass das auf der Trägerbahn befindliche Material auf die Kunststofffolie genau im Bereich des Reliefs übertragen wird. Die genaue Positionierung des Materials auf der Kunststofffolie wird durch eine exakte Anpassung der Dimensionierung der Patrize und der Matrize erzielt. In einem weiteren Schritt werden die Matrize und die Patrize wieder voneinander entfernt. Die Kunststofffolie mit dem eingeprägten Relief und dem auf dem Relief aufgepressten Material sowie die Trägerbahn werden weiter bewegt.

Gemäß einem weiteren Aspekt erhebt sich das Relief zum Inneren des Beutels oder zum Äußeren des Beutels hin aus der Kunststofffolie. Wenn sich das Relief zum Inneren des Beutels hin erhebt, ist bildlich gesprochen von außerhalb des Beutels betrachtet von dem Relief sein Negativ zu sehen. Die Beschichtung des Relief erfolgt dann in von außerhalb sichtbaren Vertiefungen des Reliefs. Dadurch kann ein ungewünschter Abrieb des Materials bei der Benutzung oder dem Transport des Beutels vermeiden oder verzögert werden.

In einer bevorzugten Ausbildungsform des Beutels können die Wandbereiche durch Siegelnähte, insbesondere Längssiegelnähte begrenzt sein. Der Beutel kann auch einen Wiederverschluss aufweisen. Die Siegelnähte erhöhen die Stabilität der Beutelstruktur. Der Wiederverschluss erlaubt eine dosierte Entnahme des Füllgutes und ein verschlossenes Lagern des in dem Beutel verbleibenden Füllgutes. Als Wiederverschluss können z.B. "Slider" oder "Zipper" oder "Peal-Seal-Folien" zum Einsatz kommen. Diese Elemente können direkt oder indirekt mit der Innenseite der Kunststofffolie verbunden sein. Der Wiederverschluss kann an dem Vorder- oder Hinterwandbereich oder an dem Seitenwandbereich vorgesehen sein. Der Beutel kann auch einen Griff aufweisen.

Durch die erfindungsgemäßen Maßnahmen kann auf bekannte Referenzmarken, die auf die Folie auf ihrer als Außenseite das Folienbeutels bestimmten Seite in Randbereichen der Folie oder eines Folienstreifens aufgedruckt sind, verzichtet werden. Vielmehr steht nun die gesamte sichtbare Fläche der Folie des Folienbeutels zur Verfügung und es können Reliefs in unterschiedlichen Ausprägungen, die zugleich für visuelle Effekte eingesetzt werden, als Referenzmarke genutzt werden. Zudem ist es belanglos, ob die Folie von ihrer als Innenseite oder ihrer als Außenseite bestimmten Seite betrachtet wird, weil ein Relief aus beiden Betrachtungsrichtungen - z.B. einerseits als Positiv und andererseits als Negativ eines Bildwerkes - eindeutig erkennbar ist.

Als Folie können unterschiedliche mehrschichtige bzw. mehrlagige Kunststofffolien oder auf Kunststoff basierende Folien zum Einsatz kommen, deren Materialzusammensetzung und / oder Schichtaufbau sich dem Fachmann durch das Studium der Lehre dieser Erfindung erschließt, ohne dass von dem Konzept der Erfindung abgewichen wird. Bei einem mehrschichtigen bzw. mehrlagigen Aufbau kann eine äußere Schicht beispielsweise aus Polyester, wie orientiertes PET, amorphes PET, Polyolefine wie Polypropylen, Cast-PP, geblasenen, gereckten, biaxial gestreckte PP-Folien oder Polyethylen, Polystyrol, Polycarbonat, Zellgas, Polyamid, Polyvinylchlorid oder deren Copolymere bestehen. Es können co-extrudierte oder laminierte Kunststoffverbundfolien verwendet werden. Die innere Schicht besteht vorzugsweise aus einem siegelfähigen Medium, wie beispielsweise aus Kunststofffolie, aus Polyolefinen, wie Polyethylen, aus EVOH, EVA, und/oder dessen Copolymeren oder Terpolymeren, Polysterol, Polycarbonat, Zellgas, Polyamid, Polyvinylchlorid usw. Die innere Schicht kann aber auch durch Extrusionsbeschichten oder Lackierung der äußeren Folie mit einem der genannten Kunststoffe gebildet werden.

Weitere, besonders vorteilhafte Ausgestaltungen und Weiterbildungen der Erfindung ergeben sich aus den abhängigen Ansprüchen sowie der nachfolgenden Beschreibung. Dabei können neben dem erfindungsgemäßen Verschließverfahren auch die anderen offenbarten Gegenstände entsprechend den abhängigen Ansprüchen zum Herstellungsverfahren weitergebildet sein. Vorteile, die im Zusammenhang mit dem Herstellungsverfahren erörtert wurden, treffen auch auf die entsprechenden Merkmale der anderen Gegenstände zu. Gleiches gilt auch in umgekehrter Weise.

Gemäß einem weiteren Aspekt wird ein Wiederverschluss als Element in Bezug auf die Referenzmarke ausgerichtet und mit einer siegelfähigen als Innenseite des Folienbeutels bestimmten Seite der Folie versiegelt. Die Ausrichtung erfolgt dabei so, dass der Wiederverschluss in einem als ersten Kopfbereich des Folienbeutels vorgesehenen Bereichs der Folie bzw. des Folienstreifens positioniert wird. Dabei wird der Wiederverschluss z.B. so auf der Folie oder dem Folienstreifen positioniert, dass er an der Innenseite der Vorderwand oder der Hinterwand des zu formenden Folienbeutels zu liegen kommt. Die Orientierung wird so gewählt, dass Verschlusselemente des Wiederverschlusses quer zur Längserstreckung des zu formenden Folienbeutels verlaufen. Der nachfolgend geformte Folienbeutel kann beispielsweise als Zwischenprodukt zur Beutelfertigung als kopfseitig und fußseitig offene Schlauchstruktur vorliegen und je nach Anwendungsfall zunächst fußseitig verschlossen werden und nachfolgend durch den offenen Kopfabschnitt hindurch befüllt und schließlich kopfseitig verschlossen werden. Um jedoch Verunreinigungen durch das Füllgut im Bereich des Kopfes des Beutels zu vermeiden, indem bevorzugt ein Wiederverschluss vorhanden ist, hat es sich als vorteilhaft erwiesen, wenn der Folienbeutel zunächst kopfseitig fertiggestellt wird, also mit seinem Wiederverschluss im Kopfbereich ausgerüstet und durch Versiegeln des Kopfbereiches, in den der Wiederverschluss vollständig integriert ist, verschlossen wird, und erst danach durch den fußseitigen Endabschnitt, der ja noch offen ist, hindurch befüllt wird. Somit ist auf zuverlässige Weise vermieden, dass ein kopfseitig vorgesehener Wiederverschluss durch staubiges Füllgut verunreinigt wird.

Ein weiterer Aspekt betrifft das Tragen des Folienbeutels. Der gegenständliche Folienbeutel kann grundsätzlich mit den Händen durch direktes zupacken getragen werden. Dies ist allerdings dann von Nachteil, wenn mit Schweißentwicklung zu rechnen ist, da der Folienbeutel aus einer Kunststofffolie gefertigt ist. Die Schweißentwicklung begünstigt ein aus der Hand Gleiten des Folienbeutels. Weiterhin könnte der Folienbeutel dazu tendieren, dass er an der Zugriffsstelle der Hände abknickt, was sich bei Wiederholung an derselben Stelle negativ auf die Festigkeit der Kunststofffolie auswirken kann, so dass diese ggf. an der Knickstelle beschädigt werden könnte. Zudem lässt sich der Folienbeutel nur bis zu einem relativ niedrigen Gewicht und nur mit sehr symmetrischen Abmessungen einfach mit den Händen tragen.

Im Lichte dieser Problematik hat der Anmelder die Aufgabe erkannt, einen Folienbeutel mit einem Griff auszurüsten, der ein zuverlässiges und einfaches Tragen des Folienbeutels ohne dessen Beschädigung und ohne Behinderung des Benutzers erlaubt, und zwar auch dann, wenn der Folienbeutel relativ schwer ist (z.B. ca. 5kg, 10 kg oder 15 kg oder ein höheres Gewicht) und wenn der Folienbeutel zudem noch extrem unsymmetrische Abmessungen aufweist (z.B. Höhe / Länge der Vorder- und Rückwand ca. 0,50 bis 0,90 m; Breite der Vorder - und Rückwand ca. 0,25 bis 0,35 m; Tiefe der Seitenfalte ca. 0,08 bis 0,15 m).

Im Rahmen dieser Aufgabenstellung hat sich die Positionierung eines Griffes in der Seitenfalte an einer zentralen Position sowohl in Bezug auf die Tiefe als auch die Höhe / Länge des Folienbeutels als vorteilhaft erwiesen.

Somit hat es sich als besonders vorteilhaft erwiesen, wenn ein Griff in Bezug auf die Referenz ausgerichtet wird und mit einer Wand des Folienbeutels verbunden wird. Gemäß einer bevorzugten Ausbildung wird der Griff insbesondere mit einer nicht-siegelfähigen als Außenseite des Folienbeutels bestimmten Seite der Folie verklebt und insbesondere entlang der Längsorientierung einer der Seitenfalten des Folienbeutels ausgerichtet.

Besonders vorteilhaft ist es, wenn die Positionierung so erfolgt, dass eine zentrale Position für die Positionierung des Griffes in Bezug auf eine Füllraumlänge des vollständig befüllten Folienbeutels gewählt wird. Unter der Füllraumlänge ist jene Länge des Folienbeutels zu verstehen, die tatsächlich im originalverpackten Zustand des Folienbeutels mit Füllgut gefüllt ist, also wenn der Folienbeutel im Wesentlichen prall gefüllt ist. Die Füllraumlänge entspricht dabei in etwa jener Länge der Seitenfalte, die bei einem prall gefüllten Folienbeutel im Wesentlichen flach entfaltet ist. Bei der Bemessung der Füllraumlänge wird bewusst auf die Einbeziehung des nach oben weg stehenden fahnenartigen Kopfbereiches, in den ggf. ein Wiederverschluss teilweise versteckt integriert ist, verzichtet, da dieser mit dem teilweise versteckten Wiederverschluss ausgerüstete Bereich des Folienbeutels nur ein vernachlässigbares Gewicht aufweist. Somit ist die Griffposition in Bezug auf die Gesamtlänge des mit einem flachen Fußteil ausgestalteten Folienbeutels zu dem Fußteil hin verschoben. Erst mit einem an besagter Position lokalisierter Griff - also genau über dem Schwerpunkt des befüllten Folienbeutels - kann ein relativ langer Folienbeutel gut ausbalanciert mit einem einzigen Griff getragen werden, und zwar ohne, dass ein störendes - je nach Orientierung des Folienbeutel bedingtes (Kopfseite nach vorne oder Kopfseite nach hinten) - nach vorne Kippen oder nach hinten Kippen bzw. ein am Boden Dahinschleifen eines der Enden des Folienbeutels zu befürchten ist.

Zudem verhindert ein in dieser Position lokalisierter Griff einerseits, dass ein gemäß den vorstehend angeführten Abmessungen dimensionierter /proportionierter und voll beladener Folienbeutel alleine durch sein Gewicht knickt. Zudem ermöglicht ein in dieser Position lokalisierter Griff dass der Folienbeutel mit seiner schmälsten Abmessung nach oben bzw. unten ragend problemlos neben dem rechten oder linken Bein eines Benutzers baumelnd bzw. schwingend mit einer einzigen Hand getragen werden kann. Diese Position des Folienbeutels beim Tragen, die sich unweigerlich durch die vorteilhafte Positionierung des Griffes ergibt, erlaubt es dem Benutzer ohne irgendeine Behinderung durch den Folienbeutel zu gehen. Der Folienbeutel muss also nicht wie bei allen anderen möglichen Positionen des Griffes mit der tragenden Hand oder zusätzlich mit der anderen Hand von den Beinen des Benutzers mühsam weggedrückt werden, um nicht unentwegt gegen die Beine zu baumeln und dabei den Benutzer beim Gehen zu behindern.

Die Ausgestaltung des Griffes kann vielfältig sein. Es hat sich aus Gründend der Kosteneinsparung und Einfachheit der Herstellung jedoch als vorteilhaft erwiesen, dass der Griff ein Griffteil aufweist, das an seinen Rändern in Befestigungsteile ausläuft. Das Griffteil ist schmäler als die Befestigungsteile und an die Hand eines Benutzers ergonomisch angepasst ausgebildet. Die Befestigungsteile sind flächig, z.B. quadratisch oder rechteckig oder rund bzw. rundlich geformt ausgebildet und mit der Außenlage der Folie des Folienbeutels vollflächig verklebt. Das Griffteil und die Befestigungsteile sind einteilig z.B. in Form eines Etiketts aus Kunststoff - ggf. mehrlagig - ausgebildet, das auf den Folienbeutel aufgeklebt ist.

Im Verlauf des Herstellungsverfahrens wird unter Berücksichtigung der Referenzmarke ein Folienstreifen aus der Folie herausgetrennt - oder anders ausgedrückt von der Folie abgetrennt - und gemäß der Referenzmarke positioniert und / oder orientiert. Der Kopfbereich wird sodann verschlossen.

Eine vollständige Integration des Wiederverschlusses in den Kopfbereich erfolgt dabei durch Umschlagen der Folie um den zuvor orientierten und positionieren Wiederverschluss und ein Versiegeln des Wiederverschlusses (genauer gesagt von Teilen des Wiederverschlusses) mit der siegelfähigen Innenlage der Folie des Folienbeutels. Dabei ist es von Vorteil, wenn im Kopfbereich der Wiederverschluss in Umfangsrichtung um den Kopfbereich rundum mit der Innenlage versiegelt wird und die an den Wiederverschluss angrenzenden Bereich der Innenlage miteinander versiegelt werden, so dass eine hermetische Abdichtung des Kopfbereiches erhalten ist und lediglich geöffnete Verschlusselemente des Wiederverschlusses eine Entnahmeöffnung für das Füllgut bilden können, wobei die Entnahmeöffnung entweder durch eine Öffnung in der Vorder- oder der Hinterwand hindurch zugänglich ist.

Der Wiederverschluss ist bevorzugt als ein sogenannter teilweise versteckter (Top-)Slider ausgebildet. Der Slider weist einen Zipper und einen mit dem Zipper zwecks Öffnen und Schließen von Verschlusselementen des Zippers zusammenwirkenden Reiter auf. Der Reiter muss aus seiner Ausgangsposition bewegt werden, um die Verschlusselemente zu öffnen. In diesem Fall ist der obere Rand des Beutels bevorzugt durch Versiegelung mit einer Quersiegelnaht verschlossen. Unterhalb dieser Quersiegelnaht kann eine Perforation existieren, die sich über die gesamte Breite des Folienbeutels erstreckt und die ein Abreißen des darüber liegenden Teils des Folienbeutels erlaubt, sodass der unterhalb der Perforation lokalisierte Top-Slider zugänglich wird.

Bevorzugt weist die Vorder- oder die Hinterwand eine Materialaussparung auf, die an der Ausgangsposition des Reiters lokalisiert ist, so dass der Reiter gut sichtbar und gut greifbar quer zu der kopfseitigen Fahne aus der kopfseitigen Fahne - in Abhängigkeit von seinen Abmessungen - ca. 1 bis 3 mm herausragt. Dies bewirkt, dass der Slider bzw. genauer gesagt von dem Slider im Wesentlichen alle Elemente mit Ausnahme des Reiters verborgen bzw. in der Fahne versteckt sind.

Der Top-Slider kann auch durch einen aus z.B. der Vorderwand herausreißbaren Folienstreifen bzw. Lasche zugänglich gemacht werden, und zwar ohne dass ein über dem Top-Slider gelegener Teil des Folienbeutels abgerissen werden muss. In diesem Fall kann auf besagte sich über die gesamte Breite des Folienbeutels erstreckende Perforation unterhalb der Quersiegelnaht verzichtet werden. Es kann jedoch besagte Perforation existieren und einen Teil der die Lasche begrenzenden Perforation bilden. Im letzten Fall lässt sich dann wieder ein Teil des Kopfbereiches, der oberhalb des teilweise versteckten Sliders liegt, vollständig von dem Folienbeutel abtrennen und auch die Lasche separat benutzen.

In einer bevorzugten Ausbildungsform weist die Vorderwand jedoch besagte Materialaussparung in Form eines Loches bzw. einer Wandöffnung auf. Der Ort dieser Materialaussparung ist durch die Position des Reiters bei geschlossenem Zustand des Sliders - also besagter Ausgangsposition des Reiters - definiert. Die Form und die Abmessungen der Materialaussparung ist im Wesentlichen an die Form und Abmessung des Reiters angepasst, so dass dieser leicht zugänglich und gut sichtbar für einen Benutzer ist. Die Abmessungen der Materialaussparung sind etwas größer als die des Reiters gewählt, um den Reiter im Herstellungsverfahren problemlos unter Ausnutzung des Reliefs als Referenz aus der Materialsaussparung herausragend positionieren zu können und einen leichten Zugriff auf besagte Lasche zu gewährleisten. Die Abmessungen der Materialaussparung sind jedoch auch so klein gewählt, dass ein Zugriff auf den Zipper bzw. ein Öffnen des Zippers ohne Bewegung des Reiters nicht möglich ist, wobei die Bewegung des Reiters ohne Betätigung besagter Lasche verhindert ist. Somit ist durch die Materialaussparung hindurch der Reiter frei zugänglich und für einen Benutzer des Folienbeutels eindeutig als Bestandteil eines Öffnungsmechanismus erkennbar.

Angrenzend an die Materialaussparung verläuft besagte aus der Vorderwand heraustrennbare oder zumindest herausklappbare Lasche, deren Form so gewählt ist, dass Sie im herausgerissenen oder herausgeklappten Zustand einen Bewegungsbereich des Reiters entlang des Zippers freilegt, so dass der Zipper durch entsprechende Bewegung des Reiters vollständig geöffnet bzw. geschlossen werden kann. Im Vergleich zu jener Ausbildung, bei welcher der Slider vollständig im Kopfbereich des Folienbeutels im Wesentlichen unsichtbar versteckt ist, hat die in vorangehend erörterte bevorzugte Ausbildungsform eines nur teilweise versteckten Sliders erhebliche Vorteile, auf die im Folgenden im Detail eingegangen ist.

Einerseits ist ein Benutzer auf den ersten Blick sofort darüber informiert, dass es sich um einen Reiter handelt, der zu bewegen ist, um den Zipper zu öffnen und zu verschließen, weil der Reiter ja sichtbar durch die Materialaussparung zugänglich ist. Die Gefahr des unachtsamen Abschneidens des Kopfbereiches zwecks Öffnung des Folienbeutels ist somit nachhaltig vermieden. Folglich wird die Wiederverschliessbarkeit des Folienbeutels nicht zerstört.

Andererseits ist für einen Benutzer auch unmittelbar klar ersichtlich, dass zum Bewegen des Reiters die benachbart zu dem in seiner Ausgangsposition geparkten Reiter angeordnete Lasche aus der Vorderwand herauszureißen oder zumindest herauszuklappen ist, um die Bewegung des Reiters überhaupt zu ermöglichen. Auch bei diesem vorteilhaften Aspekt ist die Gefahr einer ungewollten Benutzung eines Schneidwerkzeuges vollständig vermieden, weil sich aus der den Umfang der zu benutzenden Lasche eingrenzenden Perforation und der Sichtbarkeit des Reiters und ggf. eines geringen Teils des Zippers benachbart zu dem Reiter die auszuführende Handlung (herausreißen oder herausklappen) auf intuitive Weise ergibt.

Zudem ist trotz des frei sichtbar angeordneten Reiters ein eindeutig seine Jungfräulichkeit anzeigender Originalitätsverschluss erhalten, weil ein Benutzer durch visuelle Inspektion des Zustands der Lasche sofort erkennt, ob der Zipper des Sliders noch nie freigelegt wurde (angezeigt durch eine unversehrte Begrenzungsperforation der Lasche) oder ob der Zipper des Sliders schon einmal freigelegt wurde (angezeigt durch eine versehrte Begrenzungsperforation der Lasche) und daher mit großer Wahrscheinlichkeit der Slider bereits einmal geöffnet wurde. Bei einem herkömmlichen Top-Slider, der den kopfseitigen Abschluss des Folienbeutels bildet und frei zugänglich ist, ist diese visuelle Prüfung nicht möglich, da zwecks Prüfung der Reiter bewegt werden muss, um in den Slider hinein sehen zu können und prüfen zu können, ob die Stege des Sliders voneinander getrennt wurden oder nicht.

Der Slider ist mit einem seiner Stege an der Vorderwand und mit dem anderen Steg - bevorzugt über ein zwischen diesem Steg und der Hinterwand liegendes Trägerblatt, mit dem besagter Steg versiegelt ist - an der Hinterwand des Folienbeutels innenseitig angebracht (versiegelt). Der Slider ist so in den Kopfbereich integriert, dass er den Beutelinhalt dicht verschließt. Seine ineinander greifenden Verschlusselemente (des Zippers) ragen nach oben und lassen sich mit Hilfe des Reiters wiederholt öffnen und verschließen, wenn der Slider in die eine bzw. die andere Richtung bewegt wird.

Soll ein solcher Folienbeutel befüllt werden, so könnte zunächst ein Bodenbereich des Folienbeutels hergestellt und verschlossen werden und das Befüllen durch den noch nicht verschlossenen Kopfbereich erfolgen. Dazu müsste der Slider nur an einem seiner Stege mit z.B. der Vorderwand verbunden sein, so dass sich zwischen dem anderen Steg und der Hinterwand eine Befüllöffnung bildet. Dies ist jedoch nachteilig, weil der ja nach oben ragende Slider beim Befüllen des Folienbeutels mit Füllgut in die Befüllöffnung hineinklappen könnte und die Befüllung des Folienbeutels behindern oder sogar verhindern könnte. Zudem ist mit einer erheblichen Verunreinigung des Sliders zu rechnen.

Insbesondere bei einem Folienbeutel mit einem Slider haben sich die nachfolgend angeführten Maßnahmen zum Verschließen des Bodens des Folienbeutels als vorteilhaft erwiesen.

Gemäß diesem Aspekt der Erfindung erfolgt ein positionsgenaues Verschließen eines Fußbereiches nach einem erfindungsgemäßen Verschließverfahren, das bei einer erfindungsgemäßen Verschließvorrichtung abgearbeitet wird, wobei eine besonders ausgebildete Folie zum Einsatz kommt, aus der ein z.B. fußseitig offener Folienbeutel erzeugt wurde. Ein solcher Folienbeutel (bzw. ein Zwischenprodukt in Form eines Folienschlauchs) wird aus einer Folie gefertigt, wobei die Folie an ihrer ersten Seite eine nicht-siegelfähige Lage aufweist und die nicht-siegelfähige Lage eine Außenlage des Folienbeutels bildet und wobei die Folie benachbart zu der Außenlage eine siegelfähige Lage aufweist. Der Folienbeutel weist eine Vorder- und Hinterwand und zwischen der Vorder- und Hinterwand eingelegte linke und rechte Seitenfalten und in einem als Fußbereich bestimmten offenen ersten Endabschnitt einen ersten Fußteilbereich zur Bildung einer randseitigen fußseitigen Fahne und einen daran angrenzenden zweiten Fußteilbereich auf, wobei im Fußbereich die Vorder- oder die Hinterwand innerhalb des Bereiches von zumindest einer der Seitenfalten sowohl in dem ersten Fußteilbereich als auch in dem zweiten Fußteilbereich eine Öffnung in zumindest der Außenlage aufweist, durch welche Öffnung hindurch die siegelfähige Lage von außerhalb des Folienbeutels zugänglich ist, und eine Position der Öffnung so gewählt ist, dass bei hergestellter und an den zweiten Fußteilbereich umgelegter fußseitiger Fahne zwei Bereiche der von außerhalb des Folienbeutels zugänglichen siegelfähigen Lage einander überlappend zu liegen kommen.

Gemäß dem erfindungsgemäßen Verschließverfahren wird nun - bevorzugt in Bezug auf die Referenzmarke - die fußseitige Fahne durch Bildung einer ersten Quersiegelnaht im Grenzbereich des ersten Fußteilbereiches und des zweiten Fußteilbereichs realisiert, und - bevorzugt in Bezug auf die Referenzmarke - die fußseitige Fahne umgelegt an den zweiten Fußteilbereich angelegt, so dass die zwei Bereiche der siegelfähigen Lagen einander überlappen und im Bereich der Überlappung miteinander versiegelt werden. Dabei kommen eine oder mehrere Positionierungs- und / oder Orientierungs-Einrichtung(en) zum Einsatz, die im Zusammenhang mit dem Herstellungsverfahren im Detail erörtert ist (sind), wobei auch beim Verschließverfahren das Relief als Referenzmarke für die anfallenden Arbeitsschritte verwendet wird und die jeweilige Positionierungs- und / oder Orientierungs-Einrichtung die elektromechanischen Komponenten einer Verschließeinrichtung ansteuert.

Der so hergestellte Fußbereich des Folienbeutels zeichnet sich dadurch aus, dass die Fahne nun nicht mehr in Längsrichtung des Folienbeutels von dem Beutel absteht, sondern de facto an die Außenseite des Beutels angeheftet bzw. dort fixiert ist. Zudem ist durch die Maßnahmen erreicht, dass der Beutel zuverlässig auf seinem Fußbereich aufgestellt werden kann, ohne dass eine von ihm abstehende fußseitige Fahne das aufrechte Stehen und Lagern behindern würde.

Es kann zudem keine Verwechslung mehr mit dem Kopfbereich des Folienbeutels auftreten, der in Form einer relativ schmalen, sich jedoch über die gesamte Breite des Kopfbereiches großflächig erstreckenden kopfseitigen Fahne ausgebildet ist, in welche der Wiederverschluss teilweise versteckt integrierte ist. Da der Wiederverschluss nur teilweise versteckt integriert ist, ist er für den Benutzer des Folienbeutels immer sichtbar und erkennbar und es erübrigt sich, durch entsprechende Aufdrucke auf dem Folienbeutel auf seine Existenz bzw. seine korrekte Handhabung hinzuweisen. Der teilweise versteckte Wiederverschluss in der kopfseitigen Fahne und die umgelegte und nachhaltig stabil fixierte fußseitige Fahne ergänzen sich somit synergetisch, weil durch Ihre individuelle Ausgestaltung bzw. Lage oder Orientierung keine Verwechslungen zischen fußseitigem Ende und kopfseitigem Ende mehr auftreten können.

Unter einer Fahne ist im vorliegenden Fall eine flache randseitige Lagenstruktur aufgebaut aus Folienelementen bzw. -abschnitten der unterschiedlichen Seiten (Vorderseite, Hinterseite, Seitenfalte) des Folienbeutels zu verstehen, die durch entsprechende Versiegelungsmaßnahmen erhalten ist, so dass die einzelnen Folienabschnitte flächig - ggf. mit dazwischen liegenden Elementen des Wiederverschlusses - eng aneinander liegen.

Dabei wendet sich diese Maßnahme von herkömmlichen - trivialen - Versuchen einer Lösung des Problems des Verschließens eines Fußbereiches ab, bei welchen Versuchen zumeist Klebstoff zum Fixieren der fußseitigen Fahne an der Außenseite des Beutels verwendet wird. Klebstoffbasierte Lösungen zeichnen sich üblicherweise dadurch auf nachteilige Weise aus, dass sich in Randbereichen der verklebten Folienlagen, in denen der Klebstoff von außen her mehr oder weniger zugänglich ist, üblicherweise erhebliche Verunreinigungen ansammeln, die an dem Klebstoff anhaften und dort ggf. verklumpen. Zudem besteht bei der Verwendung von Klebstoff das Problem, dass dieser bereits bei sehr niedrigen Temperaturen - in anderen Worten ausgedrückt - bei bereits geringer Erwärmung seine klebenden Eigenschaften einbüßt und die Gefahr der Ablösung der angeklebten Fahne besteht. Somit erscheinen auch klebstoffbasierte Lösungen zunächst direkt nach ihrer Herstellung als durchaus vernünftige Lösungen für das vorstehend definierte Problem. Im realen Gebrauch treten jedoch erhebliche Probleme auf, weil die Stabilität des Klebstoffs zu wünschen übrig lässt und letztendlich die Verschmutzung im verklebten Bereich der Folienlagen einen minderen Eindruck beim Benutzer des Folienbeutels hinterlässt, der sich nicht nur auf den Folienbeutel selbst, sondern sich letztendlich auch auf das damit verpackte Produkt erstreckt.

Auch bei der Herstellung der klebenden Zone(n) ergeben sich erhebliche Probleme, da die entsprechenden Düsen zum Aufbringen des Klebstoffs auf dem Beutel ständig gepflegt bzw. gereinigt werden müssen und zudem die Applikationsrichtung für den Klebstoff auch äußerst ungünstig ist, da ja der Fußbereich nach oben weist und die Fahne letztendlich nach unten umgeklappt wird. Dies erfordert ein Einspritzen des relativ flüssigen Klebstoffs von schräg unten nach schräg oben, um ihn an den gewünschten Stellen zu applizieren, wodurch es zwangsläufig zu einer Verunreinigung der Düsen durch den Klebstoff selbst kommt.

Im vorliegen Fall werden siegelfähige Eigenschaften der Folie genutzt, um den Folienbeutel zu verschließen. Siegelfähig bedeutet, dass sich zwei Materiallagen durch Hitzeeinwirkung miteinander verbinden, wie dies z.B. bei thermoplastischen Materialien der Fall ist. Vorteilhafterweise distanziert sich die erfindungsgemäße Lösung von diesen vorstehend erörterten Problemen von klebstoffbasierten Lösungsversuchen dadurch, dass in den Randbereichen der miteinander versiegelnden Lagen keine Verschmutzungen anhaften können und die Versiegelung nur unter Gewaltaufwendung bzw. relativ hohen Temperaturen, die sogar die Beutelstruktur beschädigen würden, aufgebrochen werden kann. Es wird somit eine robuste und nachhaltig saubere Lösung bereitgestellt. Insbesondere ist auch die Herstellung der an dem Folienbeutel anhaftenden fußseitigen Fahne erheblich erleichtert, weil bei der gesamten Herstellung des Folienbeutels lediglich eine einziger Prozesstechnologie - nämlich Heißversiegelung - zur Anwendung kommt. Es ist also kein zusätzlicher Verklebungsprozess nötig. Die Reduktion bzw. Fokussierung auf eine einzige Verbindungstechnologie, nämlich Heißversiegelung, erhöht letztendlich auch die Effizienz des Herstellungsverfahrens erheblich.

Definitionsgemäß befindet sich die Öffnung in zumindest der Außenlage innerhalb des Bereichs von zumindest einer der Seitenfalten. Unter diesem Bereich ist zu verstehen, dass es sich um die Projektion der zwischen der Vorderwand und der Hinterwand eingeklappten bzw. eingelegten und im verschlossenen Zustand befindlichen Seitenfalte auf die Vorderwand oder die Hinterwand handelt. Die Position der Öffnungen ist innerhalb dieses Bereiches der Projektion weiterhin so eingegrenzt, dass sich die Öffnungen außerhalb jener Randbereiche befinden, in denen z.B. Längssiegelnähte und eine Quersiegelnaht erzeugt sind oder im Laufe der Herstellung des Folienbeutels erzeugt werden. Im verschlossenen Zustand soll hierbei bedeuten, dass die Seitenfalte vollständig zusammengedrückt ist und letztendlich von außerhalb des Beutels nur marginal bis gar nicht wahrgenommen werden kann. Dies steht im Gegensatz zu einer vollständig geöffneten Seitenfalte, sowie diese beispielsweise bei einem vollständig gefüllten Beutel vorliegt, bei dem die Seitenfalte zumindest großteils mehr einer flachen bzw. leicht gewölbten Wand als einer eingelegten Falte ähnelt.

Die Folie kann grundsätzlich zweilagig aufgebaut sein, so dass sie lediglich eine Innenlage, die siegelfähig ist und eine Außenlage, die nicht siegelfähig ist, aufweist. Zur Realisierung des Bodenverschlusses kann nun vorgesehen sein, dass bei der Folie lediglich bereichsweise die Außenlage entfernt wurde, so dass die unter der Außenlage liegende Innenlage durch die Öffnung in der Außenlage hindurch von außerhalb des Folienbeutels zugänglich wird. Es wird also die Innenlage jenes Folienabschnitts zugänglich, der die Öffnung aufweist. Um diese Lösung zu realisieren kann die Außenlage beispielsweise durch Sandstrahlen oder Schleifen oder durch gezielten Materialabtrag durch Einwirkung von Laserlicht sehr präzise entfernt werden, was einen entsprechend hohen Bearbeitungsaufwand und eine relativ hohe Bearbeitungspräzision erfordert.

Gemäß einer bevorzugten Ausführungsform reicht die Öffnung jedoch durch die gesamte Folie hindurch, so dass die Innenlage der Seitenfalte von außerhalb des Folienbeutels durch die Öffnung in der Folie zugänglich wird. Es wird also die Innenlage eines Folienabschnitts zugänglich, der unterschiedlich von jenem Folieabschnitt ist, der die Öffnung aufweist. Diese Lösung zeichnet sich deshalb aus, weil sich die Öffnung zum Freilegen der siegelfähigen Lage relativ einfach - zum Beispiel durch Ausstanzen - herstellen lässt.

Bei der siegelfähigen Lage, die von außerhalb zugänglich ist, kann es sich jedoch auch um eine Zwischenlage handeln, die innerhalb der Lagen der Folie - z.B. zwischen der Außenlage und der Innenlage - eingebettet ist. In diesem Fall ist dann die Außenlage und gegebenenfalls zu der siegelfähigen Lage benachbarte weitere Zwischenlagen in Richtung der Außenlage zu entfernen, um die siegelfähige Zwischenlage freizulegen, die für das Befestigen der Fahne an der Außenseite des Folienbeutels dient.

Hinsichtlich der Form bzw. Erstreckung der Öffnung können verschiedene Ausführungsbeispiele zur Anwendung kommen.

Gemäß einem Aspekt ist die in dem ersten Fußteilbereich als auch in dem zweiten Fußteilbereich ausgebildete Öffnung eine zusammenhängende Öffnung, die beispielsweise ein einige Millimeter oder einige Zentimeter breiter Öffnungsstreifen sein kann. Die zusammenhängende Öffnung erstreckt sich entlang der Längsrichtung der Seitenfalte ausgehend von einem Grenzbereich der beiden Fußteilbereiche in beide Fußteilbereiche, also in den ersten und den zweiten Fußteilbereich hinein.

Die Öffnung selbst kann dabei jede beliebige Form annehmen. So sind beispielsweise und nicht abschließend aufgezählt runde, ovale, rechteckige, schlangenlinienförmige oder auch quadratische Formen möglich. Auch kann die flächenhafte Ausdehnung der Öffnung zusammenhängend sein oder z.B. netzartig oder rippenartig unterbrochen sein.

Gemäß einem anderen Aspekt ist die in dem ersten Fußteilbereich als auch in dem zweiten Fußteilbereich ausgebildete Öffnung durch zumindest zwei separate entlang der Längsrichtung der Seitenfalte im Abstand zueinander lokalisierte Öffnungen realisiert. Die Form bzw. Ausgestaltung dieser separaten Öffnungen kann beispielsweise wiederum jede im vorangehenden Absatz angeführte Form aufweisen. Im vorliegenden Fall ist also der Grenzbereich der beiden Fußteilbereiche öffnungsfrei. Diese Lösung ist insbesondere dann von Vorteil, wenn in dem Grenzbereich zwischen den beiden Fußteilbereichen Versiegelungsmaßnahmen nötig sind, da in diesem Fall die Siegelwerkzeuge nicht durch die frei zugänglichen siegelfähigen Lagen verschmutzt werden. Hinsichtlich der Lösung gemäß dem vorangehenden Absatz kann dies jedoch auch dadurch verhindert werden, dass die Siegelwerkzeuge an der entsprechenden Position nicht siegelnde Zonen aufweisen, was jedoch eine Anpassung bestehender Siegelwerkzeuge bedeuten würde. Auf diese Anpassung kann bei zwei separaten Öffnungen, die im Abstand zueinander lokalisiert sind, verzichtet werden.

Um die Fahne an dem zweiten Fußteilbereich zu fixieren, würde es beispielsweise ausreichen, wenn nur eine einzige, wie beispielsweise eine rechtsseitige oder eine linksseitige Öffnung an dem Beutel existieren würde. Dies ist insbesondere dann machbar, wenn die Breite der Vorder- bzw. der Hinterwand des Beutels relativ gering ist. Ist jedoch die Breite der Vorder- bzw. Hinterwand des Beutels relativ groß, so ist es von Vorteil, wenn die in dem ersten Fußteilbereich als auch in dem zweiten Fußteilbereich ausgebildete Öffnung sowohl innerhalb des Bereichs der rechten als auch innerhalb des Bereichs der linken Seitenfalte ausgebildet ist. Somit lässt sich die fußseitige Fahne in den beiden Bereichen der jeweiligen Seitenfalte links und rechts an dem Beutel fixieren und ein störendes Wegklappen an der linken oder rechten Seite des Beutels - so wie dies bei einer einseitigen Fixierung möglich wäre - ist zuverlässig vermieden.

Zusammenfassend kann somit der Folienbeutel bereits mit seinem vollständig in den Kopfbereich integrierten teilweise versteckten Slider und verschlossenen Kopfbereich nach unten ragend durch den noch offenen Boden befüllt werden kann und erst nachfolgend in einem finalen Arbeitsschritt der Boden so verschlossen werden kann, dass der Folienbeutel trotz des zuletzt erfolgenden Verschließens des Bodens aufrecht auf seinem Boden stehen kann. Es besteht also nicht das Problem des Verschmutzens des teilweise versteckten Sliders oder sogar das Problem des störenden Blockierens des Kopfbereiches beim Befüllen.

Gemäß einem weiteren Aspekt, der sich auf den Folienbeutel nach seiner Befüllung mit Füllgut bezieht, wird die fußseitige Fahne durch Bildung einer ersten Quersiegelnaht im Grenzbereich des ersten Fußteilbereichs und des zweiten Fußteilbereichs realisiert. Die erste Quersiegelnaht realisiert eine strukturelle Trennung des Innenraums des Beutels von jenem Bereich des Beutels, der als fußseitige Fahne bezeichnet wird.

Zudem wird eine zweite Quersiegelnaht parallel zu der ersten Quersiegelnaht realisiert, welche zweite Quersiegelnaht die fußseitige Fahne am äußeren Rand des Folienbeutels begrenzt. Diese zweite Quersiegelnaht muss nicht zwingend am äußersten Rand des Folienbeutels verlaufen. Dies ist nur dann nötig, wenn keine auseinanderklaffenden Folienbereiche am äußersten Rand des Folienbeutels vorliegen sollen. Wenn dies nicht weiter stört, kann die zweite Quersiegelnaht auch in einem Abstand zu dem äußersten Rand des Folienbeutels angeordnet sein.

Gemäß einem weiteren Aspekt wird die fußseitige Fahne umgelegt an den zweiten Fußteilbereich angelegt und die zwei Bereiche der siegelfähigen Lagen überlappen einander und werden im Bereich der Überlappung miteinander versiegelt. Es werden also die zunächst von außerhalb des Beutels her frei zugänglichen siegelfähigen Lagen aneinandergelegt und dann durch geeignete Siegelwerkzeuge miteinander versiegelt. Dieser Vorgang fixiert die im Grenzbereich des ersten Fußteilbereichs und des zweiten Fußteilbereichs umgelegte fußseitige Fahne an dem zweiten Fußteilbereich.

Das Fixieren der fußseitigen Fahne an dem zweiten Fußteilbereich kann beispielsweise durch ein punktförmiges Versiegeln innerhalb der frei zugänglichen Bereiche der siegelfähigen Lagen erfolgen. Gemäß einem bevorzugten Ausführungsbeispiel ist die Versiegelung der zwei Bereiche der siegelfähigen Lagen Bestandteil einer Kanten- bzw. Eckensiegelnaht, welche sich im Fußbereich von einer Außenkante einer der Seitenfalten zu einer Faltkalte der fußseitigen Fahne, insbesondere in einem Winkel von z.B. 45° in Bezug auf die Faltkante erstreckt, wobei die fußseitige Fahne entlang der Faltkante umgelegt an den zweiten Fußteilbereich ist. Diese Art der Versiegelung führt letztendlich zu einem stabilen Bodenbereich, der bei einem gefüllten Beutel im Wesentlichen die Breite der Seitenfalte aufweist und somit dem gesamten Beutel eine erhöhte Standfestigkeit beschert. Die beiden Kantensiegelnähte können ausgehend von der Faltlinie bzw. Faltkante in Richtung des Endes des ersten Fußteilbereichs auslaufen. Sie können jedoch auch an der linken und rechten Seite des Folienbeutels auslaufen oder sowohl an der linken und rechten Seite des Folienbeutels als auch in Richtung des Endes des ersten Fußteilbereiches auslaufen. Die Kantensiegelnähte enden dann an den bzw. in Bereichen um Ecken des Fußbereiches.

Ein weiterer Aspekt betrifft das Erzeugen der ersten Quersiegelnaht und der zweiten Quersiegelnaht. Dies kann grundsätzlich zu unterschiedlichen Zeitpunkten erfolgen. Es hat sich jedoch als vorteilhaft erwiesen, wenn diese beiden Quersiegelnähte zeitgleich erzeugt werden, weil dann bevorzugt ein einziger Satz von Siegelwerkzeugen - z.B. ein Paar und ein weiters Paar) in einem einzigen Arbeitsgang dafür verwendet werden kann. Bevorzugt erstreckt sich jede der beiden Quersiegelnähte über die gesamte Breite der Vorder- bzw. Hinterwand und versiegelt die Vorder- und die Hinterwand bereichsweise miteinander bzw. die Vorder- und die Hinterwand bereichsweise mit den dazwischen eingeschlagenen geschlossenen Seitenfalten miteinander. Dies erhöht einerseits die Stabilität der fußseitigen Fahne und gewährt andererseits die geforderte Dichtheit des Folienbeutels und vermeidet ein lappenartiges Auseinanderklaffen der Folienelemente am Randbereich der Fahne.

Bei der Vorrichtung zum Verschließen des Folienbeutels weist die erste Siegelstufe zumindest entsprechende Paare von Siegelwerkzeugen auf, mit denen die erste bzw. die zweite Quersiegelnaht erzeugt wird. Gleiches gilt für die zweite Siegelstufe, mit der die beiden Kantensiegelnähte erzeugt werden. Die beiden Siegelstufen weisen zudem die üblichen Steuergeräte zur Einstellung und Regulierung der Temperatur der Siegelwerkzeuge sowie die elektromechanische Einheit zum Bewegen der Siegelwerkzeuge auf. Die Umlegevorrichtung kann Paare von Greifzangen aufweisen, welche die fußseitige Fahne greifen und entsprechend umlegen. Sie kann jedoch auch ein geschlitztes Rohr aufweisen, durch welches die fußseitige Fahne hindurch bewegt wird und entsprechend der Krümmung des Schlitzes entlang von dem Rohr umgelegt wird. Sie kann jedoch auch durch Platten gebildet sein, die entlang ihrer Längsausdehnung eine Krümmung aufweisen. Auch bei dieser plattenartigen Ausbildung kann die fußseitige Fahne entlang der Längsausdehnung der Platten bewegt werden und so gemäß der Krümmung umgelegt bzw. umgefaltet werden. Auch andere Varianten sind möglich.

Eine solche Vorrichtung kann Bestandteil einer Maschine sein, bei der z.B. zunächst aus der Folie ein an seinem Fußbereich offener Folienbeutel hergestellt wird, der dann erfindungsgemäß verschlossen, also versiegelt wird. Bevorzugt kann das Relief zur Positionierung und Orientierung des Folienbeutels verwendet werden, während einzelnen Arbeitsschritte - wie vorstehend erörtert - zum Verschließend des Bodenbereichs abgearbeitet werden. Dabei kann jeder Arbeitsschritt das Relief als Referenzmarke nutzen oder nur einzelne ausgewählte Arbeitsschritte (oder Gruppen davon) das Relief als Referenzmarke nutzen.

### FIGURENKURZBESCHREIBUNG

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: einen Fußbereich eines Folienbeutels;
- Fig. 2: ausschnittsweise ein erstes Ausführungsbeispiel einer Folie für den Folienbeutel gemäß der Figur 1;
- Fig. 3: ausschnittsweise ein zweites Ausführungsbeispiel einer Folie für einen Folienbeutel gemäß der Figur 1;
- Fig. 4: einen Fußbereich eines erfindungsgemäßen Folienbeutels gemäß einem zweiten Ausführungsbeispiel;
- Fig. 5: ausschnittsweise einen Querschnitt durch eine Folie für den Folienbeutel gemäß der Figur 4;
- Fig. 6: eine im Fußbereich des Folienbeutels erzeugte Fahne;
- Fig. 7: die Fahne gemäß der Fig. 6 in einem an die Außenseite des Folienbeutels angelegten Zustand;
- Fig. 8: ausschnittsweise einen Querschnitt durch die Lagenstruktur des Fußbereiches entsprechend der Schnittlinie B-B gemäß der Fig. 7 im unversiegelten Zustand;
- Fig. 9: den Fußbereich gemäß der Fig. 7 mit Kantensiegelnähten;
- Fig. 10: den Querschnitt durch die Lagenstruktur gemäß der Fig. 8 im versiegelten Zustand;
- Fig. 11: den Fußbereich des Folienbeutels in seinem fertiggestellten Zustand;
- Fig. 12: einen Fußbereich eines Folienbeutels gemäß einem dritten Ausführungsbeispiel;
- Fig. 13: eine Herstellung einer Fahne durch Versiegelung im Fußbereich;
- Fig. 14: ein Umlegen der gemäß der Fig. 13 erzeugten fußseitigen Fahne;
- Fig. 15: eine Herstellung einer Fixierung der gemäß der Fig. 14 umgelegten fußseitigen Fahne im Fußbereich des Folienbeutels;
- Fig. 16: einen Kopfbereich eines Folienbeutels;
- Fig. 17: eine Ansicht des Folienbeutels; und
- Fig. 18: eine Teilansicht des Folienbeutels mit einem Relief;
- Fig. 19: einen Schnitt durch das Relief gemäß der Fig. 18;
- Fig. 20: einen Schnitt durch ein Relief mit einer Beschichtung mit einem Material gemäß einem Ausführungsbeispiel;
- Fig. 21: eine Relief-Herstellungsvorrichtung für eine geprägte Kunststofffolie gemäß einem Ausführungsbeispiel; und
- Fig. 22: eine Folienbeutel-Herstellungsvorrichtung für einen Folienbeutel.

### BESCHREIBUNG DER AUSFÜHRUNGSBEISPIELE

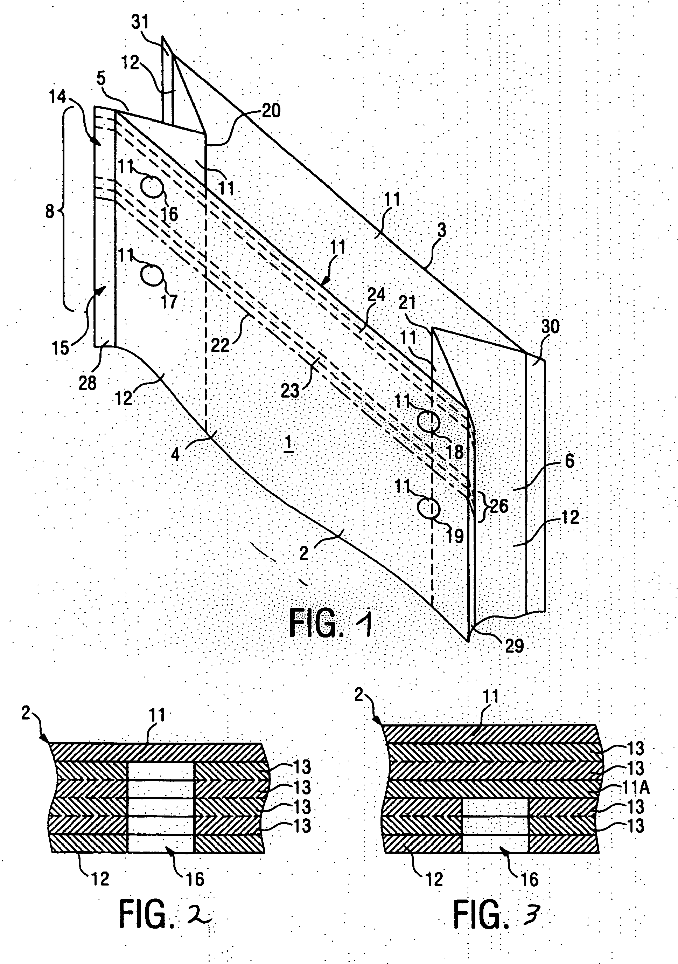

In der Fig. 1 ist von einem Folienbeutel 1 gemäß einem ersten Ausführungsbeispiel ein nach oben ragender und geöffneter Fußbereich 8 dargestellt. Ein Kopfbereich 7 des Folienbeutels 1 ist nicht dargestellt. Dieser Kopfbereich 7 sei im vorliegenden Fall bereits als verschlossen angenommen. Der Folienbeutel 1 ist aus einer Folie 2 gefertigt, deren Struktur in der Fig. 2 dargestellt ist.

Ein in der Fig. 2 dargestellter Querschnitt durch die Folie 2 zeigt eine Außenlage 12 und eine Innenlage 11 auf. Die Außenlage 12 ist nicht siegelfähig und die Innenlage 11 ist siegelfähig. Die Folie 2 weist weiters zwischen der Außenlage 12 und der Innenlage 11 vier Zwischenlagen 13 auf, die einerseits zur Stabilität beitragen und andererseits eine Barrierefunktion haben. Die Folie 2 weist weiters eine erste Öffnung 16 auf, die sich durch die Außenlage 12 und die vier Zwischenlagen 13 bis hin zu der Innenlage 11 erstreckt und diese Innenlage 11 jedoch nicht durchdringt.

Der in der Fig. 1 dargestellte Folienbeutel 1 weist eine mit Hilfe der Folie 2 gefertigte Vorderwand 3, eine Hinterwand 4, eine linke Seitenfalte 5 und eine rechte Seitenfalte 6 auf. Zentral und in Längsrichtung des Folienbeutels 1 weist die erste Seitenfalte 5 eine erste Faltkante 20 und die zweite Seitenfalte 6 eine zweite Faltkante 21 auf. Der Fußbereich 8 unterteilt sich in einen ersten Fußteilbereich 14 und in einen zweiten Fußteilbereich 15.

Die in der Fig. 2 dargestellte erste Öffnung 16 ist im Bereich der linken Seitenfalte 5 in dem ersten Fußteilbereich 14 ausgebildet, so wie dies in der Fig. 1 dargestellt ist. Genau unterhalb der ersten Öffnung 16 (lotrecht darunter bei lotrechter Lagerung des Folienbeutels 1 mit offenem Fußbereich nach oben orientiert) befindet sich eine zweite Öffnung 17, die jedoch in dem zweiten Fußteilbereich 15 lokalisiert ist. Die zweite Öffnung 17 ist genauso ausgebildet, wie die in der Fig. 2 dargestellte erste Öffnung 16. Auf gleicher Höhe wie die erste Öffnung 16 und die zweite Öffnung 17 befinden sich gespiegelt entlang einer Längsachse (nicht dargestellt) der Hinterwand 4 zwei weitere Öffnungen, nämlich eine dritte Öffnung 18 und eine vierte Öffnung 19. Die dritte Öffnung 18 befindet sich demnach ebenfalls innerhalb des Bereichs der - im vorliegenden Fall - rechten Seitenfalte 6 und im ersten Fußteilbereich 14, wohingegen sich die vierte Öffnung 19 genau unterhalb der dritten Öffnung 18 in dem zweiten Fußteilbereich 15 befindet. Auch die dritte Öffnung 18 und die vierte Öffnung 19 sind identisch ausgebildet wie die in der Fig. 2 dargestellte erste Öffnung 16.

Der erste Fußteilbereich 14 und der zweite Fußteilbereich 15 sind durch eine gedachte Faltlinie 22 voneinander getrennt. Die erste Öffnung 16 und die zweite Öffnung 17 sind im gleichen Abstand von der Faltlinie 22 lokalisiert. Ebenso ist die dritte Öffnung 18 und die vierte Öffnung 19 im gleichen Abstand von der Faltlinie 22 lokalisiert. Entlang der Faltlinie 22 wird später der erste Fußteilbereich 14 auf den zweiten Fußteilbereich 15 umgefaltet, wobei die erste und die zweite Öffnung 16 bzw. 17 sowie die dritte und die vierte Öffnung 18 bzw. 19 deckungsgleich zu liegen kommen. Darauf ist jedoch später noch im Detail eingegangen.

Die beiden Paare der Öffnungen 16 und 17 bzw. 18 und 19 können jedoch auch unterschiedlich große und unterschiedlich geformte individuelle Öffnungsabmessungen aufweisen, was das spätere überlappende Positionieren erleichtern kann.

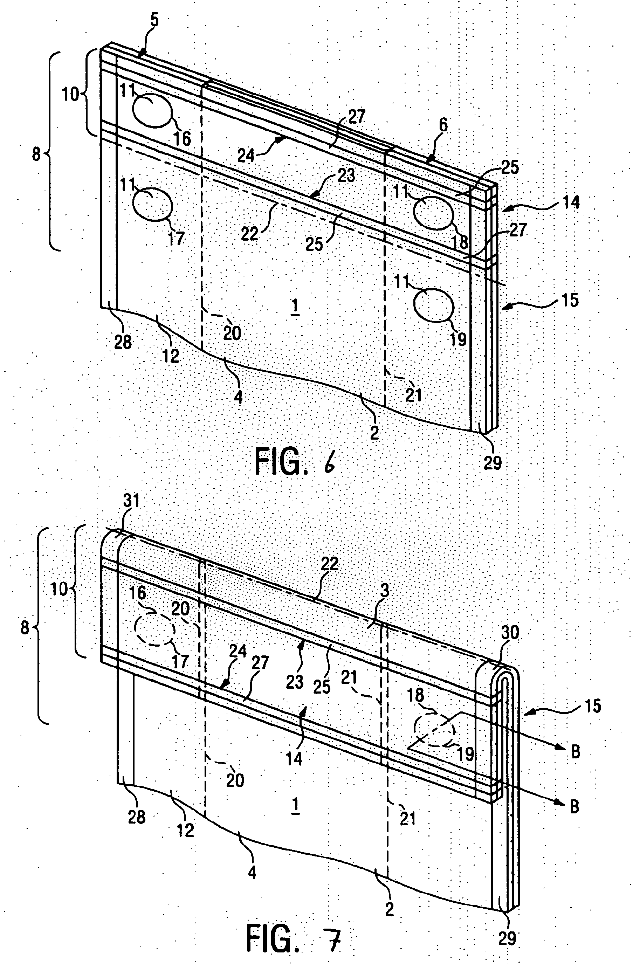

Ebenfalls sichtbar ist in der Fig. 1 eine erste Siegelzone 23 und eine zweite Siegelzone 24. Die erste Siegelzone 23 zeigt jenen Bereich des Fußbereiches 8 an, in dem zu einem späteren Zeitpunkt eine erste Quersiegelnaht 25 (siehe Fig. 6) erzeugt wird. Die erste Siegelzone 23 ist in der Nähe der Faltlinie 22 innerhalb des ersten Fußteilbereichs 14 lokalisiert. Sie befindet sich näher an der Faltlinie 22 als an der ersten Öffnung 16. Allgemein ausgedrückt erstreckt sich die erste Siegelzone 23 in einem Grenzbereich zwischen dem ersten Fußteilbereich 14 und dem zweiten Fußteilbereich 15. Am äußeren Rand des Fußbereichs 8 verläuft die zweite Siegelzone 24 zwischen einerseits dem äußeren Rand der Folie 2 und andererseits der ersten bzw. der dritten Öffnung 16 bzw. 18. Die zweite Siegelzone 24 zeigt jenen Bereich, in dem zu einem späteren Zeitpunkt eine zweite Quersiegelnaht 27 (siehe Fig. 6) erzeugt wird.

Auf die Art und Weise wie der Fußbereich 8 verschlossen wird ist nachfolgend noch im Zusammenhang mit einem zweiten Ausführungsbeispiel des Folienbeutels 1 im Detail eingegangen.

Zunächst sei jedoch auf Fig. 3 verwiesen, in der auf analoge Weise wie in der Fig. 2 ein Querschnitt durch die Folie 2 gemäß einem zweiten Ausführungsbeispiel der Folie 2 dargestellt ist. Im vorliegenden Fall befindet sich eine siegelfähige Schicht nicht nur an der Position der Innenlage 11, sondern auch zwischen den mittleren Zwischenlagen 13. Diese siegelfähige Lage sei nachfolgend als Zwischen-Innenlage 11A bezeichnet. Im vorliegenden Fall erstrecken sich dann besagte Öffnungen 16, 17, 18 und 19 in der Folie 2 nur bis zu besagter Zwischen-Innenlage 11A. Die Folie 2 gemäß der Fig. 3 lässt sich auf analoge Weise wie die Folie 2 gemäß der Fig. 2 für den Folienbeutel gemäß der Fig. 1 einsetzen.

Der in der Fig. 1 dargestellte Folienbeutel 1 weist weiters in Längsrichtung verlaufend von seinem fußseitigen Ende bis hin zu seinem kopfseitigen Ende eine erste Längssiegelnaht 28, eine zweite Längssiegelnaht 29, eine dritte Längssiegelnaht 30 und eine vierte Längssiegelnaht 31 auf. Die jeweiligen Längssiegelnähte 28, 29, 30 und 31 verbinden jeweils angrenzende Bereiche der Vorderwand 3 mit der linken Seitenfalte 5 bzw. der rechten Seitenfalte 6, sowie angrenzende Bereiche der Hinterwand 4 mit der linken Seitenfalte 5 und der rechten Seitenfalte 6. Mit Hilfe der Längssiegelnähte 28 bis 31 lassen sich einzelne Folienabschnitte, welche getrennt voneinander die jeweilige Seite des Folienbeutels 1 bilden, miteinander versiegeln, also verbinden. Wird der Folienbeutel 1 jedoch aus einem zusammenhängenden einzigen Folienstreifen gefertigt, wie dies hier der Fall ist, so erfolgt zunächst eine Schlauchbildung. Die Grundstruktur des Folienbeutels 1 ist dann eine schlauchförmige Struktur, die durch entsprechendes Falten eines ebenen Folienstücks bzw. -streifens der Folie 2 erzeugt wurde, wobei im vorliegenden Fall entlang von z. B. der vierten Längssiegelnaht 31 zwei Randbereiche des Folienstreifens durch die siegelfähige Innenlage 11 miteinander versiegelt wurden. Die Längssiegelnähte 28 bis 31 werden danach erzeugt und dienen zudem der Stabilität des Folienbeutels 1.

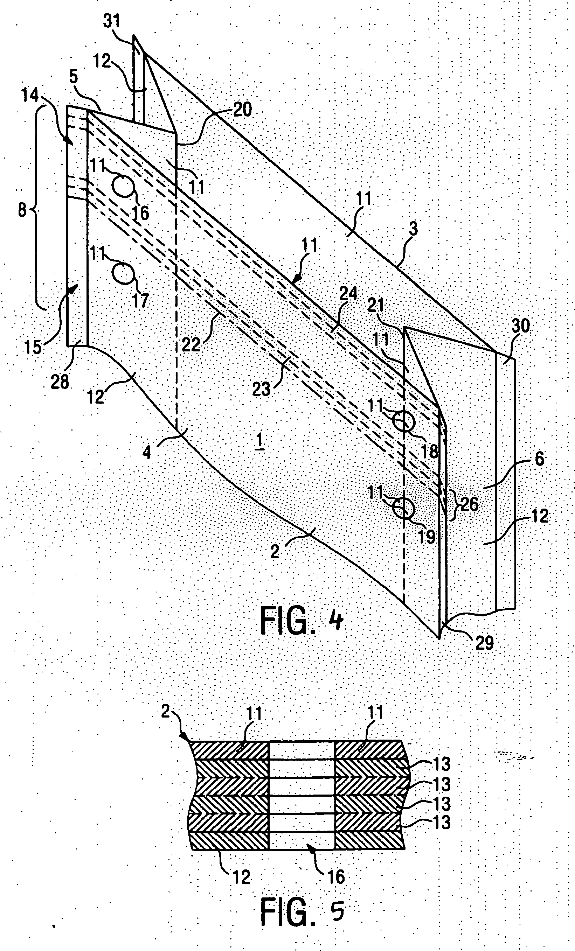

In der Fig. 4 ist ein zweites Ausführungsbeispiel des Folienbeutels 1 dargestellt, bei dem eine dritte Ausbildungsform der Folie 2 zum Einsatz kommt, die ausschnittsweise in der Fig. 5 in Form eines Querschnitts durch die erste Öffnung 16 dargestellt ist. Im vorliegenden Fall erstreckt sich die erste Öffnung 16 - was auf analoge Weise auch für die zweite Öffnung 17, die dritte Öffnung 18 und die vierte Öffnung 19 zutrifft - durch die gesamte Folie 2 hindurch. Sie durchdringt also nicht nur die Außenlage 12, sowie gegebenenfalls die Zwischenlagen 13, sondern auch die Innenlage 11 vollständig. Daher ist auch in der Perspektive gemäß der Fig. 4 durch die dritte Öffnung 18 und die vierte Öffnung 19 hindurch die zweite Faltkante 21 der rechten Seitenfalte 6 sichtbar dargestellt, was im Unterschied zu der Fig. 1 an dieser Stelle hervorgehoben ist. Durch die Öffnungen 18 und 19 hindurch ist somit links von der zweiten Faltkante 21 die Innenlage 11 der Folie 2 der Vorderwand 3 zu sehen und rechts von der zweiten Faltkante 21 ist die Innenlage 11 der Folie 2 der rechten Seitenkante 6 zu sehen. Durch die erste Öffnung 16 bzw. die zweite Öffnung 17 hindurch ist somit die Innenlage 11 der Folie 2 der linken Seitenfalte 5 zu sehen.

Nachfolgend wird anhand der Sequenz der Fig. 6-10 das Verschließen des Folienbeutels 1 im Rahmen seiner Verarbeitung auf einer Verpackungsmaschine erörtert. Auf besagter Verpackungsmaschine wird zunächst ein fußseitig offener Folienbeutel 1 aus einem Stapel entnommen und fußseitig nach oben positioniert und die linke sowie die rechte Seitenfalte 5 bzw. 6 vollständig geöffnet. Dann wird durch den geöffneten Fußbereich 8 Füllgut in den Folienbeutels 1 eingefüllt, bis die maximale Füllhöhe erreicht ist. Die maximale Füllhöhe bedeutet im vorliegenden Fall eine Füllhöhe unterhalb des Fußbereichs 8. Abgesehen vom Kopfbereich 7, der bereits verschlossen ist, lassen sich in Richtung des Kopfbereichs 7 nach dem Befüllen die rechte bzw. linke Seitenfalte 5 bzw. 6 nicht mehr verschließen. Anders ist die Situation innerhalb des Fußbereichs 8. In diesem Fußbereich 8 wird, so wie dies grob schematisch in der Fig. 6 dargestellt ist, die linke bzw. rechte Seitenfalte 5 und 6 - insbesondere in ersten Fußteilbereich 14 - wieder vollständig verschlossen und mit Siegelwerkzeugen die erste Quersiegelnaht 25 in der ersten Siegelzone 23 und die zweite Quersiegelnaht 27 in der zweiten Siegelzone 24 erzeugt. Die beiden Quersiegelnähte 25 und 27 werden zum selben Zeitpunkt erzeugt. Mit Hilfe der beiden Quersiegelnähte 25 und 27 werden zwischen den beiden Faltkanten 20 und 21 die Innenlagen 11 der Folienabschnitte der Folie 2 miteinander versiegelt, welche einerseits der Vorderwand 3 und andererseits der Hinterwand 4 zugeordnet sind. Die verbleibenden Bereiche der Vorderwand 3 bzw. der Hinterwand 4 werden mit dazu korrespondierenden Bereichen der jeweiligen Hälfte der linken bzw. rechten Seitenfalte 5 bzw. 6 versiegelt. Somit wird eine fußseitige Fahne 10 in dem ersten Fußteilbereich 14 gebildet. Durch die Öffnungen 16-19 hindurch ist nun die Innenlage 11 der Folie 2 sichtbar, welche jener Hälfte der linken bzw. rechten Seitenfalte 5 bzw. 6 zugeordnet ist, die benachbart zu der Hinterwand 4 gelegen ist.

Die so gebildete fußseitige Fahne 10 wird in einem weiteren Verarbeitungsschritt mit einem Faltwerkzeug in der in der Fig. 6 dargestellten Zeichenebene nach vorne geklappt, so dass die in der Fig. 7 dargestellte Konfiguration des Fußbereichs 8 erhalten ist. Dabei erfolgt das Umlegen der fußseitigen Fahne 10 derart, dass einerseits die zueinander korrespondierenden Öffnungen 16 bzw. 17 und andererseits die zueinander korrespondierenden Öffnungen 18 bzw. 19 deckungsgleich zu liegen kommen. Da sich die Öffnungen 16-19 nur in der Hinterwand 4 des Folienbeutels 1 befinden, sind diese bei umgelegter fußseitiger Fahne 10, so wie in der Fig. 7 dargestellt ist, nicht mehr sichtbar und nur durch unterbrochene Linien dargestellt.

In einem weiteren Arbeitsschritt wird links- und rechtsseitig im Fußbereich 8 des Folienbeutels 1 eine Kantensiegelnaht 32 bzw. 33 erzeugt. Eine erste Kantensiegelnaht 32 verläuft in einem Winkel von 45° bezogen auf die Richtung der Seitenfalte von der linken Seitenfalte 5 bis hin zu der Faltkante 22. Eine zweite Kantensiegelnaht 33 verläuft auf analoge Weise von der rechten Seitenfalte 6 aus in einem Winkel von 45° bis hin zu der Faltkante 22.

Die erste als auch die zweite Kantensiegelnaht 32 bzw. 33 sind im Unterschied zu den beiden Quersiegelnähten 22 und 24 relativ massiv ausgebildet und weisen zumindest die Breite auf, die nötig ist, um einerseits die Öffnungen 16 und 17 bzw. andererseits die Öffnungen 18 und 19 vollständig zu überdecken. Demgemäß kann sich in ihrer Längserstreckung die Form der Kantensiegelnähte 32 und 33 auch verändern, also beispielsweise außerhalb der zu übersiegelnden Öffnungen 16 und 17 bzw. 18 und 19 auch eine geringere Breite aufweisen. Durch die beiden Kantensiegelnähte 32 und 33 werden die einander gegenüberliegenden und zueinander frei zugänglichen Bereiche der Innenlage 11 innerhalb der jeweiligen Paare von Öffnungen 16 und 17 einerseits bzw. 18 und 19 andererseits miteinander versiegelt. Dadurch wird die fußseitige Fahne 10 de facto an der Außenseite des Folienbeutels 1 in seinem Fußbereich 8 fixiert bzw. stabilisiert und kann nicht mehr von dem Folienbeutel 1 abstehen.

Über die Öffnungen 16-19 hinaus verursachen die Kantensiegelnähte 32 und 33 zudem großflächige Versiegelungen voneinander gegenüberliegenden Bereiche der Innenlage 11 der Folie 2, wodurch eine relativ großflächige stabil miteinander versiegelte Zone ausgebildet wird, die sich positiv auf das Stehverhalten des mit Füllgut gefüllten Folienbeutels 1 auswirkt. Sie tragen also zur Bildung eines flachen Fußbereichs 8 bei, wenn das Füllgut bei kopfseitiger Aufwärtsausrichtung des Folienbeutels 1 sich im Folienbeutel 1 nach unten verlagert, sobald der Folienbeutel 1 nach der Befüllung umgedreht wird.

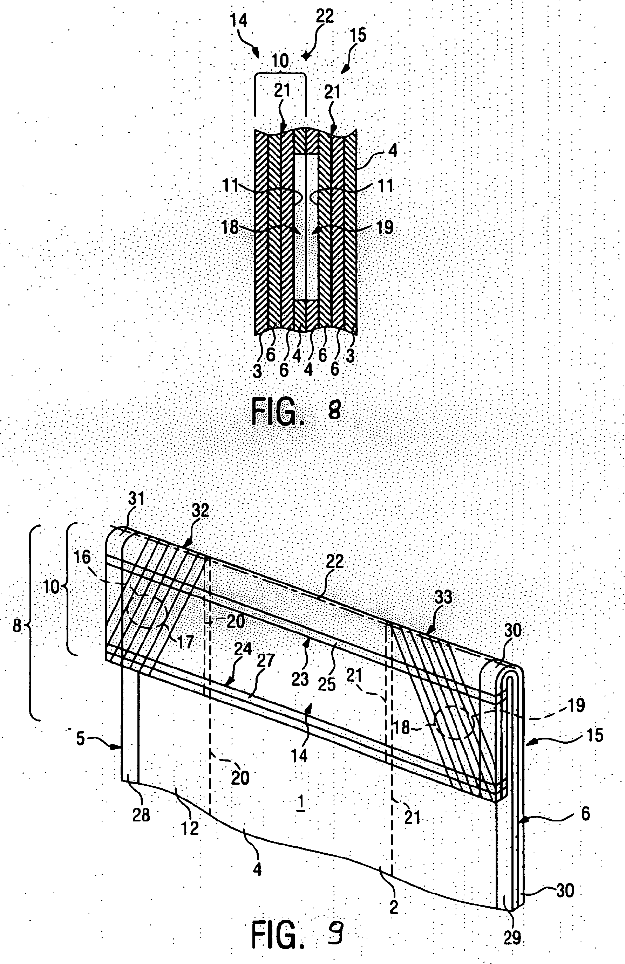

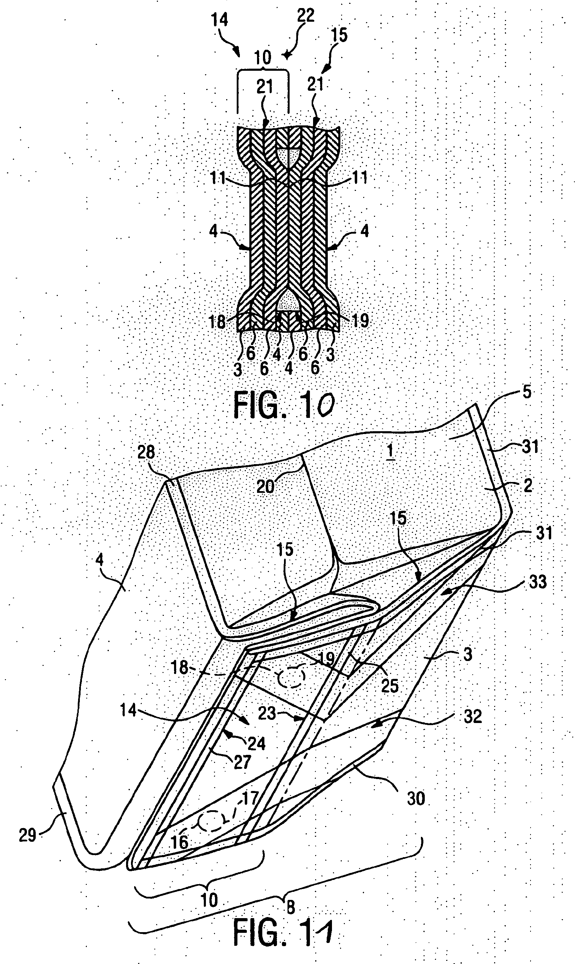

Zur Verdeutlichung des Versiegelungsvorganges im Bereich der Öffnungen 16-19 ist nachfolgend auf die Fig. 8 bzw. 10 verwiesen. In der Fig. 8 ist die in der Fig. 7 dargestellte Situation in der Schnittebene B-B dargestellt, die genau durch die Öffnung 18 bzw. 19 verläuft. Im vorliegenden Fall ist auf eine detaillierte Darstellung der Lagenstruktur der Folie 2, so wie dies in der Fig. 5 gemacht wurde, verzichtet. Vielmehr ist nur noch eine Zuordnung zu den Folienbereichen der Vorderwand 3, der Hinterwand 4, sowie der rechten Seitenfalte 6 abgestellt. Die Lage der Faltkante 22 ist in Bezug auf den Folienabschnitt ebenfalls dargestellt. Die Faltkante 22 erstreckt sich im vorliegenden Fall normal auf die Zeichenebene.

Links von der Faltkante 22 erstreckt sich jene Lagenstruktur des Folienbeutels 1, die der fußseitigen Fahne 10 bzw. dem ersten Fußteilbereich 14 zugeordnet ist. Rechts von der Faltkante 22 erstreckt sich jene Lagenstruktur des Folienbeutels 1, die dem zweiten Fußteilbereich 15 zugeordnet ist. Zwischen den beiden Lagenstrukturen, die den Fußteilbereichen 14 bzw. 15 zugeordnet sind, befindet sich eine Öffnung gebildet durch die erste Öffnung 18 und die zweite Öffnung 19.

Die äußerste rechte Lage der Lagenstruktur ist der Vorderwand 3 zugeordnet. Links davon erstrecken sich die der rechten Seitenfalte 6 zugeordneten Folienlagen gefolgt von jener der Hinterwand 4 zugeordneten Folienlage.

Die am weitesten links angeordnete Folienlage der dem ersten Fußteilbereich 14 zugeordneten Lagenstruktur entspricht der Vorderwand 3 gefolgt von jenen der rechten Seitenfalte 6 zugeordneten Folienlagen. Die am weitesten rechts angeordnete Folienlage des ersten Fußteilbereichs 14 entspricht jener der Hinterwand 4 zugeordneten Folienlage.

Die Bereiche der Innenlage 11, die sich innerhalb der dritten und vierten Öffnung 18 bzw. 19 gegenüberliegen, sind im vorliegenden Fall noch nicht miteinander versiegelt. Im Unterschied dazu ist in der Fig. 10 der nach dem Erzeugen der beiden Kantensiegelnähte 32 und 33 erzielte Zustand sichtbar, in dem die Bereiche der Innenlage 11 der Seitenfalte 6 bereits miteinander versiegelt dargestellt sind. Gleiches gilt sinngemäß für die Innenlage 11 der linken Seitenfalte 5, die über die Öffnungen 16 und 17 miteinander versiegelt werden.

Nachdem die Fahne 10 auf der Außenseite des Folienbeutels 1 fixiert wurde, wird der Folienbeutel 1 umgedreht, so dass sein Fußbereich 8 nach unten weisend ausgerichtet ist. Das Füllgut verteilt sich nun ebenfalls in Richtung des Fußbereiches 8. Bedingt durch das Gewicht des Füllguts, welches den zweiten Fußteilbereich 15 aufbläht, und die Faltung bzw. Versiegelung des Fußbereiches 8 entsteht beim Abstellen des Folienbeutels 1 auf den Boden letztendlich die in der Fig. 11 dargestellte Ausbildung des Fußbereiches 8, die eine im Wesentlichen flache Form aufweist und insbesondere eine an den Folienbeutel 1 angeschmiegte fußseitige Fahne 10 aufweist. In der Fig. 11 sind aus Gründen der Übersichtlichkeit nur mehr die Ränder der beiden Kantensiegelnähte 32 und 33 sichtbar eingezeichnet und es wurde auf eine Darstellung von Längsriffen in den Kantensiegelnähten 32 und 33, die in der Fig. 9 deutlich dargestellt sind, verzichtet. Der Folienbeutel 1 kann nun problemlos auf seinem Fußbereich 8 aufrecht stehend abgestellt bzw. in Reihe mit anderen identisch ausgebildeten Folienbeuteln 1 abgestellt werden.

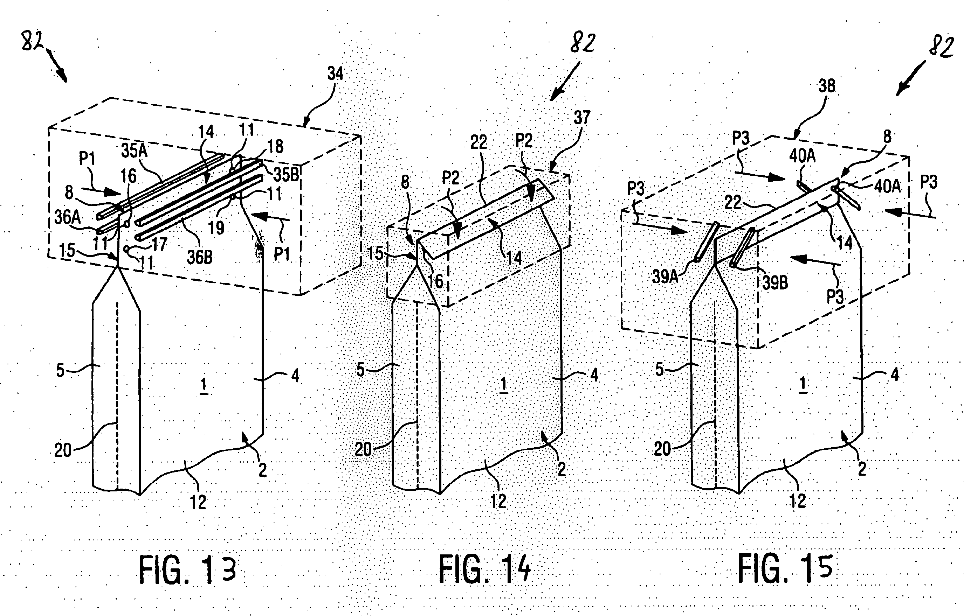

In der Figur 13 bis 15 ist der Vorgang des Erzeugens der fußseitigen Fahne 10, des Umlegens der fußseitigen Fahne 10 an die Außenseite des Folienbeutels 1 und des Fixierens der fußseitigen Fahne 10 an der Außenseite des Folienbeutels 1 in dessen Fußbereich 8 dargestellt. Dabei kommt bei einer Abfüll- und / oder Verschließmaschine ein Aggregat in Form einer Vorrichtung zum Verschließen (Verschließvorrichtung 82 - nicht im Detail dargestellt) des Folienbeutels 1 zum Einsatz. In den Figuren 13 bis 15 wurden aus Gründen der Übersichtlichkeit nicht mehr alle Details des Folienbeutels 1 oder der Folie 2 bzw. alle Siegelnähte eingezeichnet, obwohl diese existieren. Details des Kopfbereiches 7 wurden gänzlich ignoriert. Im vorliegenden Fall handelt es sich um einen zuvor durch den Kopfbereich 7 befüllten Folienbetel 1. Andernfalls, also im Fall eines kopfseitig offenen Folienbeutels 1 könnte der Fußbereich 8 auch nach unten ragen oder in jede beliebige Richtung orientiert sein.

In einem ersten Arbeitsschritt (siehe Figur 13) wird durch entsprechende Mittel (nicht dargestellt) eine flache Lagenstruktur bestehend aus Vorder- und Hinterwand 3 bzw. 4 sowie dazwischen eingelegten geschlossenen Seitenfalten 5 bzw. 6 erzeugt. Die Mittel können Greifzangen sein, welche die Wände 3, 4, 5 und 6 des Folienbeutels 1 im gewünschten Bereich zusammendrücken. Die flache Lagenstruktur wird im vorliegenden Fall bei einem bereits befüllten Folienbeutel 1 vorwiegend im Fußbereich 8 erzeugt. Sie kann sich jedoch bei einem nicht befüllten, also leeren Folienbeutel 1 über dessen gesamte Länge erstrecken. Im letzten Fall sind die Mittel im Wesentlich durch eine Bewegungseinrichtung gebildet, welche die ja bereits flach aneinander liegende Lagenstruktur hin zu ihrem nächsten Bearbeitungsplatz bewegt bzw. dort entsprechend positioniert.

In einem zweiten Arbeitsschritt werden mit einer ersten Siegelstufe 34 (nur schematisch angedeutet) die erste Quersiegelnaht 25 und gleichzeitig die zweite Quersiegelnaht 27 erzeugt. Von der ersten Siegelstufe 34 sind lediglich die zum Bilden der zwei Quersiegelnähte 25 und 27 verwendeten Paare von ersten Siegelwerkzeugen 35A und 35B bzw. zweiten Siegelwerkzeugen 36A und 36B dargestellt. Die Paare der Siegelwerkzeuge 35A und 35B bzw. 36A und 36B sind balkenförmig ausgebildet und werden gemäß den ersten Pfeilen P1 zueinander bewegt, um die zwei Quersiegelnähte 25 und 27 zu erzeugen. Dies erzeugt besagte fußseitiger Fahne 10.

In einem dritten Arbeitsschritt wird der Fußbereich 8 entlang der Faltlinie 2 gefaltet bzw. die zuvor erzeugte fußseitige Fahne 10 mit Hilfe einer Umlegvorrichtung 37 (nur schematisch angedeutet) an den zweiten Fußteilbereich 15 umgelegt. Dies erfolgt so, dass die erste Öffnung 16 mit der zweiten Öffnung 17 bzw. die dritte Öffnung 18 mit der vierten Öffnung 19 deckungsgleich oder zumindest überlappend zu liegen kommt. Die Umlegevorrichtung 37 weist Paare von Greifzangen (nicht dargestellt) auf, welche die fußseitige Fahne 10 greifen und gemäß der durch zweite Pfeile P2 angedeuteten Richtung bzw. Bewegung umlegen.

In einem vierten Arbeitsschritt werden mit einer zweiten Siegelstufe 38 die jeweiligen durch die Öffnungen hindurch zugänglichen und aufeinander liegenden Bereich der siegelfähigen Lage 11 miteinander versiegelt. Von der zweiten Siegelstufe sind lediglich Paare von dritten Siegelwerkzeugen 39A und 39B bzw. vierten Siegelwerkzeugen 40A und 40B dargestellt. Die Paare der Siegelwerkzeuge 39A und 39B bzw. 40A und 40B sind balkenförmig ausgebildet und werden gemäß den dritten Pfeilen P3 zueinander bewegt, um die beiden Kantensiegelnähte 32 und 33 im Fußbereich 8 zu erzeugen.

Bei der ersten Siegelstufe 34 sowie bei der zweiten Siegelstufe 38 erfolgt das Versiegeln durch Hitzeeinwirkung über die Siegelwerkzeuge 35A bis 36B bzw. 39A bis 40B.

Das Problem von abstehenden fußseitigen Fahnen 10, die ein aufrechtes Stehen der Folienbeutel verhindern bzw. beeinträchtigen ist somit beseitigt. Zudem sorgen die großflächigen Kantensiegelnähte 32 und 33 für eine stabile und flache Ausbildung des Bodenbereiches bzw. Fußbereichs 8.

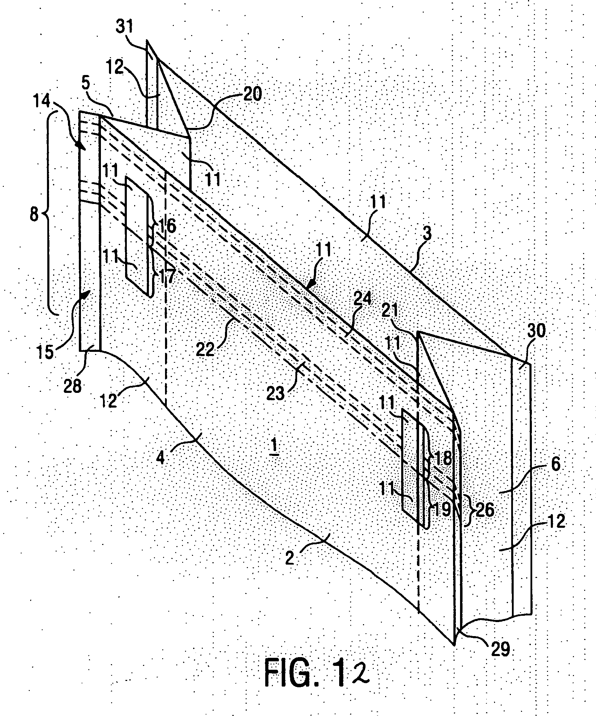

In der Fig. 12 ist ein weiteres Ausführungsbeispiel eines Folienbeutels 1 dargestellt, wobei im vorliegenden Fall im Bereich der linken und rechten Seitenfalte 5 bzw. 6 die Hinterwand 4 jeweils eine zusammenhängende Öffnung (Kombination / Verschmelzung der durch die Bezugszeichen 16 und 17 bzw. 18 und 19 gekennzeichneten Bereiche / Öffnungen) aufweist, die sich jeweils über die erste Siegelzone 23 sowie über die Faltkante 22 hinweg erstrecken. Das Verschließen des Folienbeutels 1 erfolgt auf analoge Weise wie vorstehend erörtert.

Auch wenn in den vorangehend erörterten Ausführungsbeispiel die Öffnungen 16, 17, 18 und 19 immer in der Hinterwand 4 dargestellt wurden, sei an dieser Stelle erwähnt, dass diese Öffnungen 16, 17, 18 und 19 auch an der Vorderwand 3 ausgebildet sein können. Das Umlegen der fußseitigen Fahne 10 erfolgt dann in Richtung der Vorderwand 3, an der die fußseitige Fahne 10 letztendlich wie vorangehend erörtert fixiert wird.

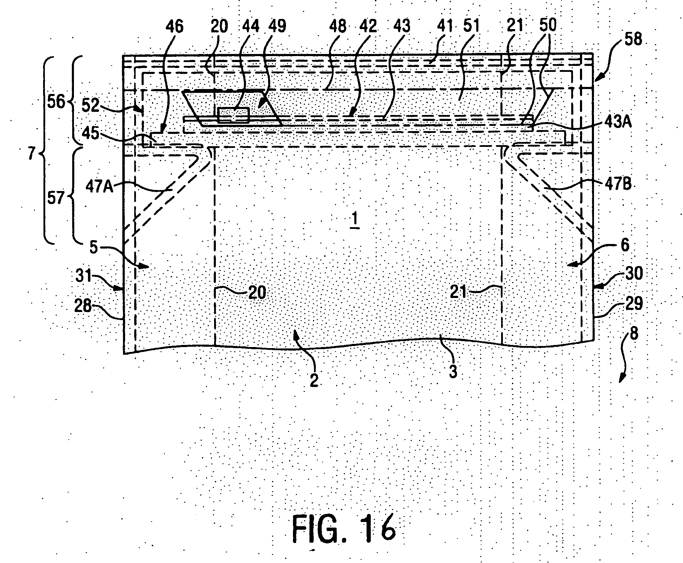

In der Figur 16 ist ein Kopfbereich 7 eines Folienbeutels 1 dargestellt, der mit einer randseitigen Kopfsiegelnaht 41, die mit den Längssiegelnähten 28 bis 31 überlappt, verschlossen ist und mit einem als Wiederverschluss fungierenden unter der Kopfsiegelnaht 41 lokalisierten (teilweise versteckten) Top-Slider, nachfolgend kurz Slider 42 genannt, ausgerüstet ist.

Der Slider 42 weist ein Paar ineinander verriegelnde Verschlusselemente 43 und einen Reiter 44 auf, mit dessen Hilfe sich die Verschlusselemente 43 bei einer Bewegung des Reiters 44 nach rechts öffnen und bei einer Bewegung des Reiters 44 nach links schließen lassen. Der Slider 42 weist zudem einen ersten Steg 45 und einen zweiten Steg 46 auf, wobei jeder der beiden Stege 45 und 46 eines der besagten Verschlusselemente 43 trägt. Der erste Steg 45 ist in der Perspektive der Fig. 16 vor dem zweiten Steg 46 deckungsgleich lokalisiert und deckt diesen optisch ab. Jedes der beiden Verschlusselemente 43 ist über einen ihm zugeordneten Verbindungsstreifen 43A mit dem ihm zugeordneten Steg 45 bzw. 46 verbunden. Jeder Verbindungsstreifen 43A und sein ihm zugeordneter Stege sind einteilig ausgeführt. Die beiden Verschlusselemente 43 sind an ihrem rechten und an ihrem linken Rand miteinander verschweißt. Die Stege 45 und 46 zusammen mit den Verschlusselementen 43 und den Verbindungsstreifen 43A bilden einen Zipper. Im noch nicht erstmalig geöffneten Zustand sind bei dem Slider 42 die unteren Enden der beiden Stege 45 und 46 miteinander verbunden. Dies stellt einen Originalverschluss des Folienbeutels 1 dar. Dieser Originalverschluss muss vor einer der erstmaligen Füllgutentnahme aufgebrochen bzw. aufgerissen werden. Der Slider 42 weist weiters ein Trägerblatt 52 auf. Der hintere (zweite) Steg 46 ist mit einem Trägerblatt 52 versiegelt.

Der Slider 42 ist linksseitig zwischen die linke Seitenfalte 5 und die Vorderwand 3 und rechtsseitig zwischen die rechte Seitenfalte 6 und die Vorderwand 3 eingelegt. Dort ist der erste Steg 45 mit der Innenlage 11 der Vorderwand 3 versiegelt. Dort ist weiters der zweite Steg 46 über das Trägerblatt 52 mit der Innenlage 11 der zu ihm hinweisenden einen Hälfte der rechten bzw. linken Seitenfalte 5 bzw. 6 versiegelt. Im Bereich der Seitenfalten 5 bzw. 6 ist weiterhin sowohl die Innenlage 11 der anderen Hälfte der linken Seitenfalten 5 als auch die Innenlage 11 der anderen Hälfte der rechten Seitenfalte 6 mit der Innenlage 11 der Hinterwand 4 versiegelt. Links- und Rechtsseitig von den beiden Stegen 45 und 46 sind die Seitenfalten 5 bzw. 6 durch weitere Siegelzonen (nicht im Detail eingezeichnet) hermetisch verschlossen.

Außerhalb des Bereiches der Seitenfalten 5 und 6 erstrecken sich die Stege 45 und 46 zwischen der Vorder- und der Hinterwand 3 bzw. 4. In dieser Zone ist der erste Steg 45 mit der Innenlage 11 der Vorderwand 3 und der zweite Steg 46 über das dazwischen liegende Trägerblatt 52 mit der Innenlage 11 der Hinterwand 4 versiegelt. Die beiden Stege 45 und 46 sind nicht miteinander versiegelt und definieren zwischen ihnen eine Ausschüttöffnung sobald ihre ursprüngliche Verbindung zwischen ihnen erstmalig aufgebrochen wurde. Eine Öffnungsweite der Ausschüttöffnung ist durch die Position des Reiters 44 bestimmt.

Obwohl sich die beiden Seitenfalten 5 und 6 bis hin zu dem oberen Rand des Folienbeutels 1 erstrecken sind die beiden Seitenfalten 5 und 6 unterhalb von den beiden Stege 45 und 46 durch eine Begrenzungs-Siegelnaht 47A bzw. 47B begrenzt. Diese Begrenzungs-Siegelnaht 47A bzw. 47B verläuft bereichsweise parallel zu den Stegen 45 und 46 und überlappt dort geringfügig mit ihnen und verläuft darunter schräg von der jeweiligen Faltkante 20 bzw. 21 weg hin zu einem äußeren Rand der jeweiligen Seitenfalte 5 bzw. 6 nach unten hin zu dem Fußbereich 8 orientiert. Die Begrenzungs-Siegelnähte 47A und 48B sind sowohl zwischen der Vorderwand 3 und dem ihr zugewandten Teil der jeweiligen Seitenfalte 5 bzw. 6 (vordere Begrenzungs-Siegelnaht) als auch zwischen der Hinterwand 4 und dem ihr zugewandten Teil der jeweiligen Seitenfalte 5 bzw. 6 (hintere Begrenzungs-Siegelnaht) ausgebildet. Die schräge Ausbildung der Begrenzungs-Siegelnaht 47A bzw. 47B verhindert einen Stau von auszuschüttendem Füllgut. Die hintere bzw. vordere linke Begrenzungs-Siegelnaht 47A beginnt und endet an der ersten Längssiegelnaht 28 bzw. an der vierten Längssiegelnaht 31 oder überlappt an ihren beiden Enden mit der ersten Längssiegelnaht 28 bzw. mit der vierten Längssiegelnaht 31. Die hintere bzw. die vordere rechte Begrenzungs-Siegelnaht 47B beginnt und endet an der zweiten Längssiegelnaht 29 bzw. an der dritten Längssiegelnaht 30 oder überlappt an ihren beiden Enden mit der zweiten Längssiegelnaht 29 bzw. der dritten Längssiegelnaht 30.

Zwischen den Verschlusselementen 43 des Hooded-Top-Slider 42 und der Kopfsiegelnaht 41 ist eine sich über die gesamte Breite des Folienbeutels 1 erstreckende Abreißperforation 48 in die Folie 2 integrierte, die bis in das Trägerblatt 52 hinein reicht. Die Abreißperforation 48 erstreckt sich über den gesamten Umfang des Folienbeutels 1. Sie erlaubt ein Abreißen des durch sie begrenzten äußeren Bereich des Folienbeutels 1 von dem darunter lokalisierten Bereich des Folienbeutels 1. Das Trägerblatt 52 ist zwischen der Abreißperforation 48 und der Kopfsiegeinaht 41 mit der Innenlage 11 der Vorderwand 3 versiegelt.

Im Bereich um den in seiner Ausgangslage (linksseitig positioniert) befindlichen Reiter 44 weist die Vorderwand 3 eine Materialaussparung 49 (Öffnung) in Form eines Parallelogramms auf, welche den Zugriff auf den Reiter 44 erleichtert. Anschließend an die rechte untere Ecke der Materialaussparung 49 erstreckt sich eine Laschenperforation 50, die sich parallel zu den Verschlusselementen 43 bis hin zu dem rechten Ende der Verschlusselemente 43 erstreckt und von dort aus nach oben hin zu der Abreißperforation 48 verläuft, wo sie endet. Die Laschenperforation 50 begrenzt - beginnend an der rechten Seite der Materialaussparung 49 - zusammen mit der Abreißperforation 48 eine Lasche 51, die alleine oder zusammen mit dem oberhalb der Abreißperforation 48 lokalisierten Bereich des Folienbeutels 1 von dem Folienbeutel 1 weggerissen werden kann, um den Reiter 44 einfacher bedienen zu können und die Verschlusselemente 43 bzw. die durch sie im geöffneten Zustand freigelegte Ausschüttöffnung zugänglich zu machen.

Die Orientierung des Parallelogramms der Materialaussparung 49 ist so gewählt, dass sie am linken Beginn der Laschenperforation 50 einen spitzen Winkel aufweist, welcher das Einreißen der Folie 2 entlang der Laschenperforation 50 begünstigt und ein ausbrechen des Einrisses in eine Zone der Versigelung des ersten Stegs 45 mit der Vorderwand 3 verhindert.

Gemäß einer weiteren Ausbildungsform (nicht dargestellt) ist die Ausdehnung der Abreißperforation 48 nur auf den oberen Rand der Lasche 51 begrenzt. In diesem Fall dient sie lediglich der Begrenzung der Lasche 51 und der obere Bereich des Folienbeutels 1 lässt sich nicht von dem darunter liegenden Bereich abreißen. Es lässt sich also nur die Lasche 51 aus der Vorderwand 3 herausreißen.

Die Perforationen 48 und 50 können auf verschiedenste Weise realisier sein, wie beispielsweise durch einen Schneidevorgang, einen Prägevorgang oder durch Laserlichteinwirkung usw.

Gemäß einem weiteren Ausführungsbeispiel ist der Folienbeutel 1 vor seiner Befüllung durch den offenen Kopfbereich 7 und nachfolgender Versiegelung des Kopfbereiches 7 bereits fußseitig erfindungsgemäß verschlossen, was vorangehend im Detail bereits erörtert wurde, so dass an dieser Stelle lediglich darauf verweisen wird.

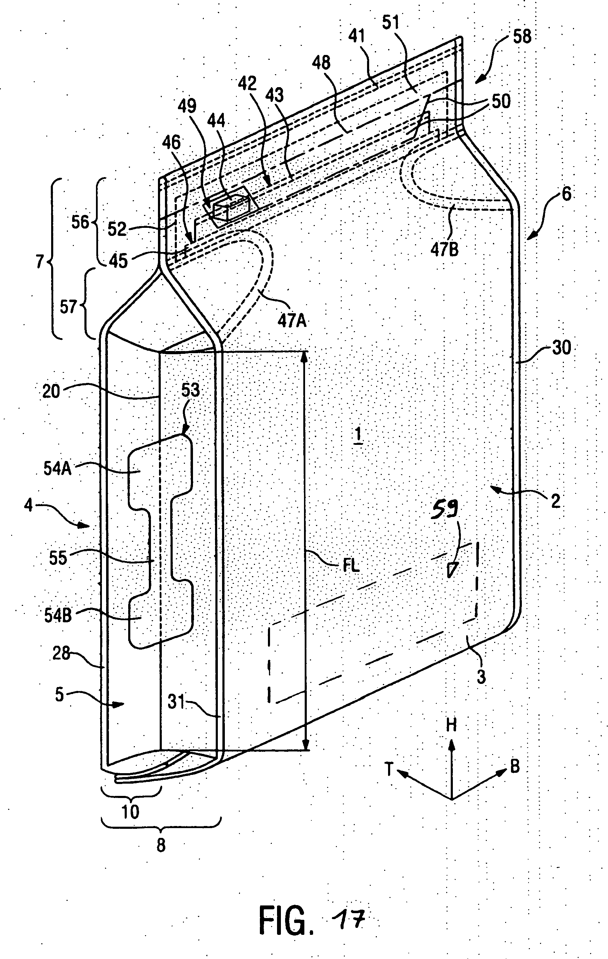

In der Fig. 17 ist eine vollständige Ansicht des Folienbeutels 1 dargestellt, in der sowohl der Kopfbereich 7, also auch der Fußbereich 8 und ein in der linken Seitenfalte 6 integrierter Griff 53 dargestellt ist. Der Griff 53 ist aus einem einzigen Materialsstreifen gefertigt. Der Griff 53 weist ein mittiges Griffteil 55 zum Anfassen auf. Der Griff 53 weist weiters ein erstes Befestigungsteil 54A und ein zweites Befestigungsteil 54B auf, die beide mit Hilfe eines Klebstoffes an die Folie 2 des Folienbeutels 1 angeklebt sind. Der Griff 53 ist zentrisch in der linken Seitenfalte 6 in Bezug auf die Tiefe T der Seitenfalte 5 (bzw. 6) angeordnet. Dies erleichtert das Tragen des Folienbeutels 1, so dass dieser mit seiner schlanken Seite quer ab von den Beinen eines Benutzers mit nur einer Hand getragen werden kann und den Benutzer nicht beim Gehen behindert. Der Griff 53 ist weiters auch in Richtung der Höhe / Länge H der Seitenfalte 5 (bzw. 6) in Bezug auf die Füllraumlänge FL zentrisch angeordnet. Diese in Bezug auf den tatsächlichen Füllraum abgestimmte zentrale Position des Griffes 53 über dem tatsächlichen durch das Füllgut dominierend bestimmten Schwerpunkt verhindert bei originaler (praller / vollständiger) Beladung und entsprechend großer Länge des Folienbeutels, dass der Folienbeutel beim Tragen mit dem Griff 53 ungewollt nach vorne oder nach hinten wegkippt.

In Analogie zu dem fußseitigen Ende 8 gliedert sich auch das kopfseitige Ende, also der Kopfbereich 7 in einen ersten Kopfteilbereich 56 und einen zweiten Kopfteilbereich 57. Der erste Kopfteilbereich 56 bildet eine kopfseitige Fahne 58, die durch ein Versiegeln der Innenseiten der Folie 2 erzeugt wurde. Deutlich zu sehen ist im Bereich der kopfseitigen Fahne 58 ein Teil des teilweise versteckten Sliders 42, der im Kopfbereich 7 in der kopfseitigen Fahne 58 integriert ist. Von dem teilweise versteckten Slider sind benachbart zu dem Reiter 44 nur kurze Abschnitte der Verschlusselemente 43 und der Reiter 44 selbst durch die Materialaussparung 49 hindurch zu sehen. Ausgehend von dem ersten Kopfteilbereich 56 (also der kopfseitigen Fahne 58) öffnet sich innerhalb des zweiten Kopfteilbereichs 57 der Innenraum des Folienbeutels 1 relativ rasch hin zu den beiden Wänden 3 und 4, die bei einem prall gefüllten Folienbeutel 1 letztendlich in etwa im Abstand der Tiefe T der Seitenfalten 5 bzw. 6 voneinander beabstandet (also mit Abstand zueinander lokalisiert) sind.

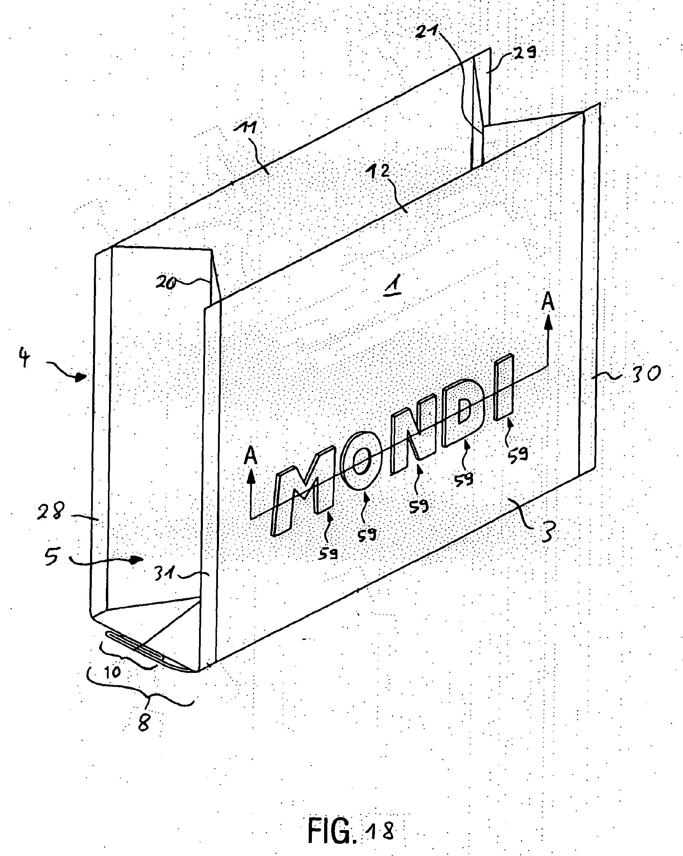

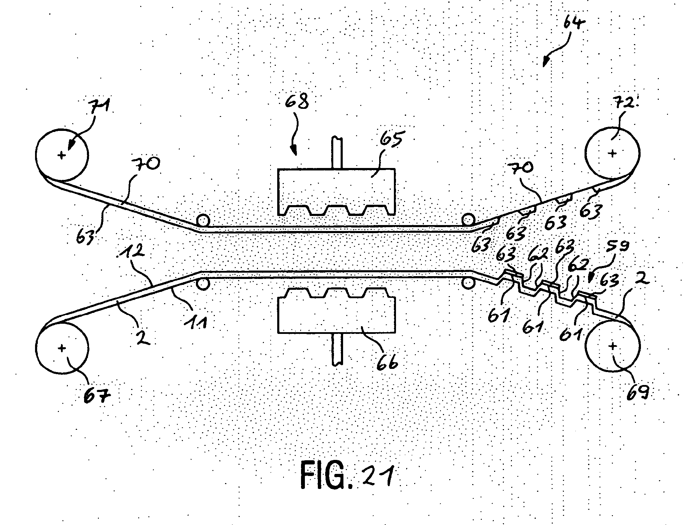

In der Fig. 17 ist im unteren Bereich des Folienbeutels 1 zudem ein Zone angedeutet, wo ein Relief 59 ausgebildet ist, worauf nachfolgend noch im Detail eingegangen ist. In der Fig. 18 ist jener Bereich des Folienbeutels 1 im Detail dargestellt, in dem das Relief 59 lokalistisiert ist. Aus Gründen der Übersichtlichkeit sind von dem Bodenbereich 8 nicht mehr alle Details dargestellt. Das Relief 59 ist durch einen Prägevorgang an jenem Teil der Folie 2 erzeugt, der bei dem fertig gestellten Folienbeutel 1 die Vorderwand 3 bildet. Dabei kommt die Folie 2 zwischen zwei Prägewerkzeugen, nämlich einer Patrize 66 und einer Matrize 65 zu liegen und die beiden Prägewerkzeuge werden gegeneinander gepresst (siehe Details dazu in Fig. 21). Das in der Fig. 18 abgebildete Relief 59 - im vorliegenden Fall der Schriftzug "MONDI" - ragt plastisch aus dem ebenen Hintergrund der äußeren Fläche der Folie 2 heraus.

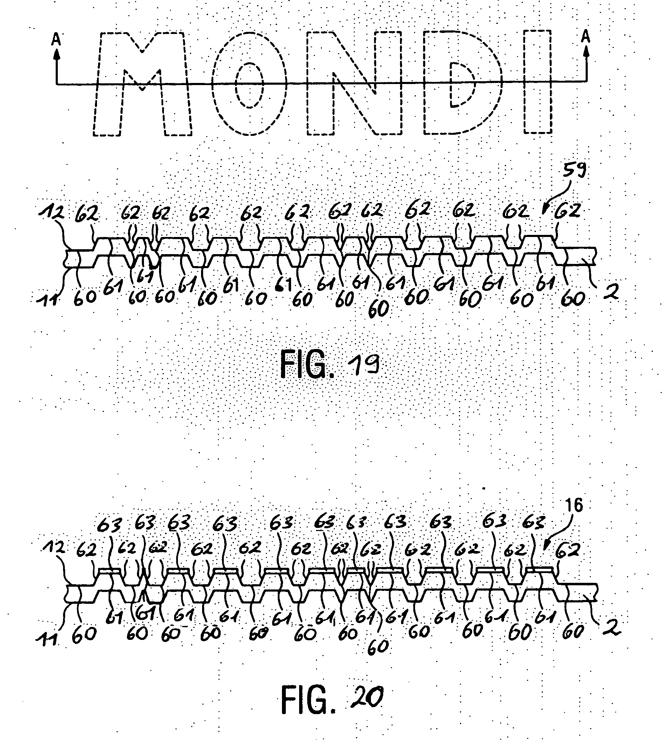

Die Struktur des Reliefs 59 entlang der in der Fig. 18 eingezeichneten Schnittlinie A-A ist in der Fig. 19 dargestellt. Zur Verdeutlichung, wie die Erhebungen in der Folie 2 zustande gekommen sind, ist oberhalb der Schnittdarstellung nochmals der Schriftzug "MONDI" mit der in der Fig. 18 dargestellten Schnittlinie A-A abgebildet. In der Fig. 19 ist deutlich zu sehen, wie durch den Prägeprozess die Folie 2, die durch die Außenlage 12 und die Innenlage 11 begrenzt ist, verformt wird. Im Gegensatz zu nicht geprägten Bereichen erheben sich geprägte Bereichen aus der sonst ebenen Fläche der Folie 2 heraus. Auf der Außenseite des Folienbeutels 1 bilden sich somit erste Bereiche 60 aus, die in der Ebene der ursprünglichen (nicht geprägten) Außenfläche der Folie 2 verlaufen. Dazwischen sind zweite Bereiche 61 vorhanden, die im Wesentlichen ebenfalls parallel zu der ursprünglichen (nicht geprägten) Oberfläche der Folie 2 verlaufen. Zwischen den ersten Bereichen 60 und den zweiten Bereichen 61 sind Flanken 62 ausgebildet. Die zweiten Bereiche 61 zusammen mit den Flanken 62 bilden das Relief 59.

Die Flanken 62 realisieren eine Diskontinuität in dem Reflektions- bzw. Absorptionsverhalten der Außenseite der Folie 2. Die Flanken 62 erleichtern also das automatische Erkennen der Konturen des Reliefs 59 selbst bei ungünstigen Lichtverhältnissen, weil genau in diesen Bereichen das Licht anders reflektiert oder absorbiert wird, als im Vergleich zu einer Reflexion oder Absorption in den ersten oder zweiten Bereichen 60 bzw. 61. Die Flanken 62 bzw. Konturen des Reliefs 59 und letztendlich die daraus abzuleitende in dem Relief 59 kodierte Information lassen sich somit relativ einfach durch optische Differenzmessungen ermitteln. Dabei wird die Reflexion bzw. die Absorption von Licht an den Flanken 62 mit der Reflexion bzw. Absorption des Lichts an den umliegenden Bereichen verglichen. Daraus lassen sich Bilddaten generieren, welche die Kontur repräsentieren und einer weiteren Datenverarbeitung zugeführt werden.

In der Fig. 20 ist ein bevorzugtes Ausführungsbeispiel des Reliefs 59 abgebildet. Es weisen die zweiten Bereiche 61 oberhalb der Außenlage 12 eine Materialschicht 63 auf. Die Materialschicht 63 weist ein von den ersten Bereichen 60 und den Flanken 62 unterschiedliches Reflektions- bzw. Absorptionsverhalten auf. Dies trägt insbesondere zur besseren automatischen Erkennbarkeit des Reliefs 59 bei. Im Vergleich zu der Ausbildung gemäß der Fig. 19 sind nun nicht mehr nur relativ schmale Flanken 62, sondern auch die relativ großen zweiten Bereiche 61 gut und zuverlässig von den ersten Bereichen 60 auf automatische Weise zu unterscheiden. Es wird also die automatische Erkennbarkeit des gesamten Reliefs 59 verbessert.

In der Fig. 21 ist stark schematisiert eine Relief-Herstellungsvorrichtung 64 zum Herstellen der mit dem Relief 59 versehenen Folie 2 abgebildet. Mit ihrer Hilfe wird das in der Fig. 20 dargestellte Relief 59 in der Folie 2 erzeugt. Die Vorrichtung 64 weist besagte Matrize 65 und eine Patrize 66 auf. Die Folie 2 wird von einer ersten Abwickelvorrichtung 67 abgewickelt und einem zwischen der Matrize 65 und der Patrize 66 gelegenen Prägebereich 68 zugeführt. Nach dem Prägevorgang wird die geprägte Folie 2 auf einer ersten Aufwickelvorrichtung 69 zum Zweck der Speicherung für eine weitere Verarbeitung zu einem Folienbeutel 1 aufgewickelt.

Die Materialschicht 63 ist auf einem Trägerband 70 aufgetragen und wird zusammen mit dem Trägerband 70 von einer zweiten Abwickelvorrichtung 71 abgewickelt und dem Prägebereich 68 zugeführt. Nach dem Prägevorgang verbleiben vereinzelte Bereiche der Materialschicht 63 auf dem Trägerband 70 und werden zusammen mit dem Trägerband 70 auf einer zweiten Aufwickelvorrichtung 72 aufgewickelt. Dazwischenliegende Bereiche der Materialschicht 63 werden durch den Prägevorgang auf die Außenlage 12 der Folie 2 auf die zweiten Bereiche 61 aufgetragen.

Die Folie 2 und das Trägerband 70 werden synchron zueinander bewegt und verharren während des Prägevorgangs in Ruhe.

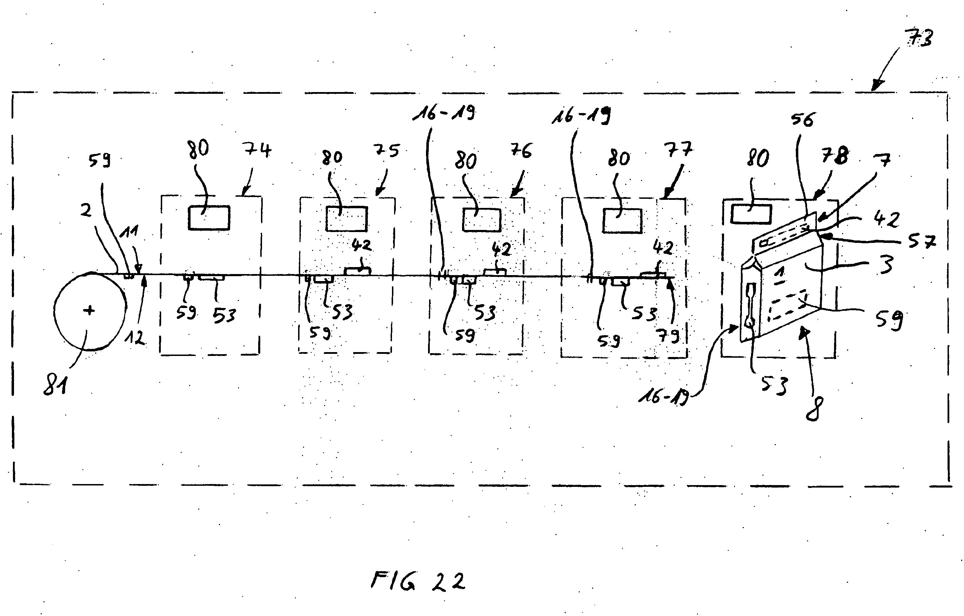

In der Fig. 22 ist eine Folienbeutel-Herstellungsvorrichtung 73 zum Herstellen des Folienbeutels 1 aus einer geprägten Folie 2 grob schematisiert dargestellt, wobei lediglich fünf Bearbeitungsstationen (nachfolgend als Stationen bezeichnet), nämlich eine erste Station 74 zum Aufbringen von Griffen 53 auf die Folie 2, eine zweite Station 75 zum Aufbringen von Wiederverschlüssen 42 auf der Folie 2, eine dritte Station 76 zum Erzeugen der Öffnungen 16 bis 19, eine vierte Station 77 zum Abtrennen von einem Folienestreifen 79 von dem kontinuierlichen Band der Folie 2 aufweisend den Griff 53 und den Slider 42 und die vier Öffnungen 16 bis 19, und letztendlich eine fünfte Stufe 78 zum Herstellen einer schlauchförmigen Struktur durch Faltung des Folienstreifens 79 und Herstellung von entsprechenden Siegelnähten sowie zum hermetischen Verschließen des Kopfbereiches 7 durch entsprechende Versiegelungsprozesse (siehe dazu vorangehende Figuren und zugehörige Beschreibung). Vor der ersten Station 74 befindet sich eine dritte Abwickelvorrichtung 81, mit deren Hilfe die auf einer Speicherrolle gespeicherte bandförmige geprägte Folie 2 abgewickelt wird und der ersten Station zugeführt wird. Die Reihenfolge der Stationen 74 - 78 kann auch von der in der Fig. 22 dargestellten Reihenfolge abweichen.

Jeder der Stationen 74 bis 78 weist eine Positionierungs- und / oder Orientierungs-Einrichtung 80 zum Erkennen und Nutzen einer Referenzmarke in Form des Reliefs 59 für Orientierungs- und / oder Positionierungszwecke auf. Auch wenn die Einrichtungen 80 immer oberhalb der Folie 2 dargestellt sind, können sie oder Teile von ihnen auch unterhalb der Folie 2 lokalisiert sein. Die Einrichtung 80 weist eine Kamera (nicht dargestellt) und entsprechenden Datenverarbeitungseinrichtungen (nicht dargestellt) zum Verarbeiten von Bilddaten der Kamera auf. Die Bilddaten werden auf vorab bekannte Reliefs 59 bzw. ihre Orientierung und/oder ihre Position geprüft und in Abhängigkeit von der Prüfung werden Steuersignale an die elektromechanischen Komponenten der jeweiligen Stufe 74 bis 78 zwecks Ansteuerung dieser Komponenten zum exakten Positionieren und / oder Orientieren von der Folie 2 oder von einem Folienstreifen 79 oder von Elementen, wie z.B. ein Griff 53 oder ein Wiederverschluss 42, die mit der Folie 2 oder dem Folienstreifen 79 zu verbinden sind, abgegeben. Die Einrichtung 80 ist demnach zum Erkennen und Nutzen von besagtem Relief 59 als Referenzmarke für Aufgaben der Positionierung und /oder Orientierung ausgebildet. In jedem Verarbeitungsschritt wird also das Relief erfasst und der jeweilige positions- und / oder orientierungsbezogene Anteil des Arbeitsschritt in Bezug auf die Position und / oder Orientierung des Reliefs ausgeführt.

Nach der Herstellung des kopfseitig verschlossenen Folienbeutels 1 kann der noch offene Fußbereich 8 mit Hilfe einer Verschließvorrichtung 82, die grob schematisch in den Figuren 13 bis 15 dargestellt ist, ebenfalls unter Ausnutzung des Reliefs 59 als Referenzmarke zur Positionierung und / oder Orientierung gemäß einem erfindungsgemäßen Verschließverfahrens verschlossen werden.

Anstelle von verteilten Datenverarbeitungseinrichtungen kann auch eine zentrale Datenverarbeitungseinrichtung zum Einsatz kommen.

Auch wenn in den vorangehenden Erörterungen nur ebene Reliefe 59 dargestellt wurden, kann das Relief 59 auch eine spitze oder kuppel- oder domartige Form haben. Es wird abschließend noch einmal darauf hingewiesen, dass es sich bei den vorhergehend detailliert beschriebenen Ausführungsformen nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Auch können im Zusammenhang mit einem Ausführungsbeispiel offenbarte Merkmale der anderen Ausführungsbeispiele in Kombination mit dort offenbarten Merkmalen zur Anwendung kommen. Auch können die Proportionen der dargestellten Merkmale variieren, ohne dass von dem Konzept der Erfindung abgewichen wird.

### BEZUGSZEICHENLISTE

- 1: Folienbeutel
- 2: Folie
- 3: Vorderwand
- 4: Hinterwand
- 5: linke Seitenfalte
- 6: rechte Seitenfalte
- 7: kopfseitiges Ende / Kopfbereich
- 8: fußseitiges Ende / Fußbereich
- 9: Wiederverschluss
- 10: fußseitige Fahne
- 11: Innenlage
- 11A: Zwischen-Innenlage
- 12: Außenlage
- 13: Zwischenlagen
- 14: erster Fußteilbereich
- 15: zweiter Fußteilbereich
- 16: erste Öffnung
- 17: zweite Öffnung
- 18: dritte Öffnung
- 19: vierte Öffnung
- 20: erste Faltkante
- 21: zweite Faltkante
- 22: Faltlinie / Faltkante
- 23: erste Siegelzone
- 24: zweite Siegelzone
- 25: erste Quersiegelnaht
- 26: Grenzbereich
- 27: zweite Quersiegelnaht
- 28: erste Längssiegelnaht
- 29: zweite Längssiegelnaht
- 30: dritte Längssiegelnaht
- 31: vierte Längssiegelnaht
- 32: erste Kantensiegelnaht
- 33: zweite Kantensiegelnaht
- 34: erste Siegelstufe
- 35A, 35B: Paare von ersten Siegelwerkzeugen
- 36A, 36B: Paare von zweiten Siegelwerkzeugen
- 37: Umlegevorrichtung
- 38: zweite Siegelstufe
- 39A, 39B: Paare von dritten Siegelwerkzeugen
- 40A, 40B: Paare von vierten Siegelwerkzeugen
- 41: Kopfsiegelnaht
- 42: Wiederverschluss (Slider)
- 43: Verschlusselemente
- 44: Reiter
- 45: erster Steg
- 46: zweiter Steg
- 47A, 47B: Begrenzungs-Siegelnaht
- 48: Abreißperforation
- 49: Materialaussparung
- 50: Laschenperforation
- 51: Lasche
- 52: Trägerblatt
- 53: Griff
- 54A: erstes Befestigungsteil
- 54B: zweites Befestigungsteil
- 55: Griffteil
- 56: erster Kopfteilbereich
- 57: zweiter Kopfteilbereich
- 58: kopfseitige Fahne
- 59: Relief
- 60: erster Bereich
- 61: zweiter Bereich
- 62: Flanke
- 63: Materialschicht
- 64: Relief-Herstellungsvorrichtung
- 65: Matrize
- 66: Patrize
- 67: erste Abwickelvorrichtung
- 68: Prägebereich
- 69: erste Aufwickelvorrichtung
- 70: Trägerband
- 71: zweite Abwickelvorrichtung
- 72: zweite Aufwickelvorrichtung
- 73: Folien-Herstellungsvorrichtung
- 74: erste Station
- 75: zweite Station
- 76: dritte Station
- 77: vierte Station
- 78: fünfte Station
- 79: Folienstreifen
- 80: Positionierungs- und / oder Orientierungs-Einrichtung
- 81: dritte Abwickelvorrichtung
- 82: Verschließvorrichtung
- P1: erster Pfeil
- P2: zweiter Pfeil
- P3: dritter Pfeil
- H: Höhe
- B: Breite
- T: Tiefe
- FL: Füllraumlänge

## Patentansprüche

1. Verschließverfahren zum Verschließen von einem Folienbeutel (1), der aus einer Folie (2) gefertigt ist, wobei der Folienbeutel (1)
- eine Vorder- und Hinterwand (3, 4) und zwischen der Vorder- und Hinterwand (3, 4) eingelegte linke und rechte Seitenfalten (5, 6) aufweist, und
- in einem als Fußbereich (8) bestimmten ersten Endabschnitt einen ersten Fußteilbereich (14) zur Bildung einer fußseitigen Fahne (10) und einen daran angrenzenden zweiten Fußteilbereich (15) aufweist, **dadurch gekennzeichnet**, daβ im Fußbereich (8) die Vorder- oder die Hinterwand (3, 4) innerhalb des Bereiches von zumindest einer der Seitenfalten (5,6) sowohl in dem ersten Fußteilbereich (14) als auch in dem zweiten Fußteilbereich (15) eine Öffnung (16, 17, 18, 19) in zumindest der Außenlage (12) aufweist, durch welche Öffnung (16, 17, 18, 19) hindurch die siegelfähige Lage (11; 11A) von außerhalb des Folienbeutels (1) zugänglich ist, und eine Position der Öffnung (16, 17, 18, 19) so gewählt ist, dass bei hergestellter und an den zweiten Fußteilbereich (15) umgelegter fußseitigen Fahne (10) zwei Bereiche der von außerhalb des Folienbeutels (1) zugänglichen siegelfähigen Lage (11; 11A) einander überlappend zu liegen kommen, wobei
- bevorzugt in Bezug auf das Relief (59) - die fußseitige Fahne (10) durch Bildung einer ersten Quersiegelnaht (25) im Grenzbereich des ersten Fußteilbereiches (14) und des zweiten Fußteilbereichs (15) realisiert wird, und
- bevorzugt in Bezug auf das Relief (59) - die fußseitige Fahne (10) umgelegt an den zweiten Fußteilbereich (15) angelegt wird, so dass die zwei Bereiche der siegelfähigen Lagen (11; 11A) einander überlappen und im Bereich der Überlappung miteinander versiegelt werden, und daβ die Folie (2) eine Referenzmarke in Form eines Reliefs (59) zur Positionierung und / oder Orientierung aufweist und wobei die Folie (2) an ihrer ersten Seite eine nicht-siegelfähige Lage aufweist und die nicht-siegelfähige Lage eine Außenlage (12) des Folienbeutels (1) bildet und wobei die Folie (2) benachbart zu der Außenlage (12) eine siegelfähige Lage (11; 11A) aufweist.

## Claims

1. A closing method for closing a film bag (1), which is made of a film (2), wherein the film bag (1)
- comprises a front and rear wall (3, 4) and left and right side folds (5, 6), which are inserted between the front and rear wall (3, 4), and
- a first bottom part area (14) for forming a lug (10) on the bottom side in a first end section designated as bottom area (8) and a second bottom area (15) adjacent thereto, **characterized in that**, in the bottom area (8), the front or the rear wall (3, 4) comprises an opening (16, 17, 18, 19) in at least the outer layer (12) within the area of at least one of the side folds (5, 6) in the first bottom area (14) as well as in the second bottom area (15), the sealable layer (11; 11A) being accessible from outside the film bag (1) through said opening (16, 17, 18, 19), and a position of the opening (16, 17, 18, 19) is chosen such that two areas of the sealable layer (11; 11A), which can be accessed from outside the film bag (1), come to rest so as to overlap one another, when the lug (10) on the bottom side is produced and is turned over the second bottom part area (15), wherein
- preferably with reference to the relief (59) - the lug (10) on the bottom side is realized by the formation of a first lateral sealed seam (25) in the threshold of the first bottom part area (14) and of the second bottom part area (15), and
- preferably with reference to the relief (59) - the lug (10) on the bottom side is turned over and attached to the second bottom part area (15), so that the two areas of the sealable layers (11; 11A) overlap one another and are sealed with one another in the area of the overlap, and **in that**
- the film (2) comprises a reference mark in the form of a relief (59) for positioning and/or orientation and wherein the film (2) comprises a non-sealable layer on its first side and the non-sealable layer forms an outer layer (12) of the film bag (1) and wherein the film (2) comprises a sealable layer (11; 11A) adjacent to the outer layer (12).

## Revendications

1. Procédé de fermeture pour fermer un sachet en film (1) qui est fabriqué à partir d'un film,
- comporte une paroi avant et une paroi arrière (3, 4) et des plis latéraux (5, 6) gauche et droit insérés entre la paroi avant et la paroi arrière (3, 4) et
- comporte dans une première section d'extrémité définie comme étant la zone de base (8) une première zone de base partielle (14) pour créer un talon (10) côté base et une deuxième zone de base partielle (15), **caractérisé en ce que** dans la zone de base (8), la paroi avant ou la paroi arrière (3, 4) comporte à l'intérieur de la zone d'au moins l'un des plis latéraux (5, 6), aussi bien dans la première zone de base partielle (14) qu'également dans la deuxième zone de base partielle (15) une ouverture (16, 17, 18, 19) dans au moins la couche extérieure (12), à travers laquelle ouverture (16, 17, 18, 19) la couche scellable (11 ; 11A) est accessible à partir de l'extérieur du sachet en film (1) et **en ce qu'**une position de l'ouverture (16, 17, 18, 19) est choisie de telle sorte que lorsque le talon (10) côté base est créé et replié sur la deuxième zone de base partielle (15), deux zones de la couche scellable (11 ; 11A) accessible à partir de l'extérieur du sachet en film viennent se poser en se chevauchant, alors que
- de préférence par rapport au relief (59, on réalise le talon (10) côté base par création d'un joint scellé transversal (25) dans la zone limitrophe entre la première zone de base partielle (14) et la deuxième zone de base partielle (15) et
- de préférence par rapport au relief (59), on applique le talon (10) côté base replié sur la deuxième zone de base partielle (15), de sorte que les deux zones des couches scellables (11 ; 11A) se chevauchent et qu'on les scelle ensemble dans la zone du chevauchement et **en ce que**
- le film (2) comporte un repère de référence sous la forme d'un relief (59), pour le positionnement et/ou l'orientation et le film (2) comportant sur sa première face une couche non scellable et la couche non scellable formant une couche extérieure (12) du sachet en film (1) et dans le voisinage de la couche extérieure (12), le film (2) comportant une couche scellable (11 ; 11A).
